# EUROPEAN PATENT SPECIFICATION

(11) **EP 1 525 768 B1**
(45) Date of publication and mention of the grant of the patent: **23.01.2008**
(21) Application number: 03766528.8
(22) Date of filing: 30.07.2003
(51) Int. Cl.: H04Q 7/36

(54) **A THREE-DIMENSION COVERAGE CELLULAR NETWORK**
DREIDIMENSIONEN-ABDECKUNGS-ZELLULARNETZWERK
RESEAU CELLULAIRE POSSEDANT UNE COUVERTURE TRIDIMENSIONNELLE

(30) Priority: 31.07.2002 CA 2393552
(43) Date of publication of application: 27.04.2005
(73) Proprietor: Xie, Yuan, Toronto, Ontario M9V 5G9 (CA)
(72) Inventor: Xie, Yuan, Toronto, Ontario M9V 5G9 (CA)
(74) Representative: Maggs, Michael Norman
(86) International application number: PCT/IB2003/003022
(87) International publication number: WO 2004/014095

(56) References cited:
- EP-A- 0 531 090
- WO-A-01/29926
- US-A1- 2002 097 191

## Description

### Field of The Invention

This invention relates to cellular signal coverage on ground and above ground for a cellular telecommunication system. It is about network, method, base station and antenna to establish three-dimension cellular signal coverage for a cellular telecommunication system and meanwhile eliminate interferences in a geographical area.

### Background

Mobile cellular telecommunication system (simply called "mobile cellular system", or "cellular system"), originally invented by Bell Telephone Laboratories in the 1970s (U.S. patent No. 3,663,762), is generally known to include at least one mobile switch centre (MSC), a plurality of base stations dispersed across a geographic area and a plurality of ground-based subscriber radio stations. It comprises of at least one control channel and a group of traffic channels, and provides mobile wireless access telecommunication services for ground-based subscriber radio stations using radio frequencies or frequency spectra allocated for cellular mobile communications. Each base station includes a base station transceivers system (BTS), at least one base station antenna and an antenna supporting structure (tower, pole and rooftop etc.), and serves a ground area - a ground cell, which is covered by one or a plurality of base station antennas. Each ground cell can be further divided into multiple ground sectors, each of which is covered by one or a plurality of base station sector antennas. Radio frequencies or frequency spectra are reused among the ground cells and sectors. The BTS includes a plurality of transmitters and a plurality of receivers, both comprising at least one control channel and a plurality of traffic channels. Exclusive radio frequency bands are assigned to mobile cellular systems in a geographical area. In North America, two frequency bands are assigned to mobile cellular systems. One is 800MHz band with transmission frequency from 824MHz to 849MHz and receiving frequency from 869MHz to 894MHz; another one is 1900MHz band with transmission frequency from 1850MHz to 1910MHz and receiving frequency from 1930MHz to 1990MHz.

Cellular system is based on two basic concepts: cells and frequency reuse. A geographical area is divided into many smaller service areas-cells, which are generally represented as hexagons tangent at each other and composing a cellular pattern. Base stations locate proximately at the centres of each cell with antennas mounted on towers (or poles, rooftops etc.), transmitting/receiving radio signals and communicating with subscriber radio stations in their own cells. Radio frequencies are reused among these cells. The advantage of this strategy is great increase in network capacity with limited frequency spectra. Today, this cellular strategy has been widely used in various mobile cellular systems, like AMPS (advanced mobile phone system) system, TDMA (time division multiple access) system, GSM (global system for mobile communications) system, CDMA (code division multiple access) system and 3G (third generation cellular system). (A cell is the geographical area or space covered by a base station or a subsystem of the base station corresponding to a specific logical identification on the radio path. A cell is also considered as the coverage extent of a base station or a subsystem of the base station. Mobile stations in a cell may be reached by the corresponding radio equipment of the base station).

Radio frequencies reuse among cells can cause interferences. In FDMA (frequency division multiple access) cellular systems (like AMPS) and TDMA cellular systems (like GSM), radio frequencies reuse causes co-channel interferences. In order to minimize co-channel interferences, cellular network structure is designed to increase the distances of co-channel interfering sources to subscriber radio stations. Cells are organized in clusters. A cluster is a group of cells. Within a cluster of cells, the whole available frequency spectra can be exploited. A portion of the total number of frequency channels is allocated to each cell, while adjacent cells within the same cluster are assigned different groups of frequency channels. There is no radio frequency reuse within a cluster. The frequency channels arrangement in a cluster then repeats in all clusters of a cellular network. In this structure, frequency reuse distance is much larger than the cell's radius, helping to reduce co-channel interferences. A cell can further be split into multiple sectors with directional sector antennas. Each sector covers a part area of the cell. Each sector is assigned a portion of the total frequency channels of the cell. The orientation of sector antenna further reduces co-channel interferences. In a CDMA cellular system, all cells use the same spread spectrum in a wide frequency range. The interferences come from increased on-going communications within the cell and from the adjacent cells, which contribute as noise floor to the system. Less signals radiating to the adjacent cells, less interferences will be created to the system. Containing base station radio signals within its own cell is a way to control interferences in the cellular system.

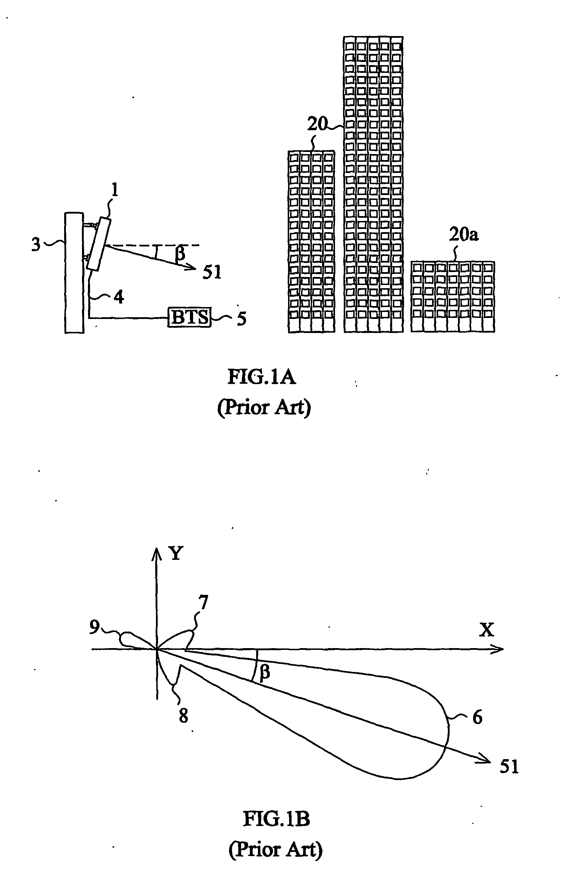

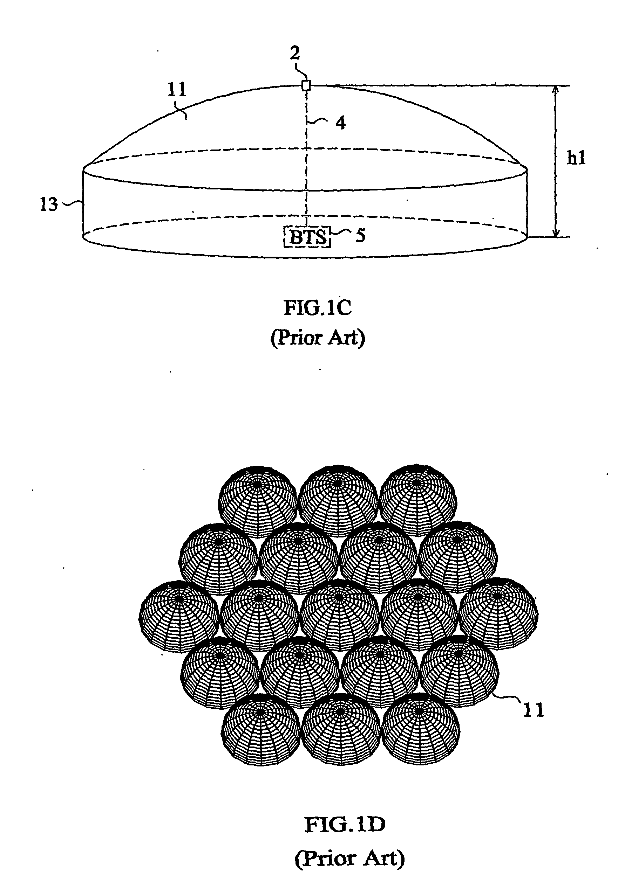

As shown in FIG.1A and 1B, the down-tilt beam base station antenna (simply called "down-tilt antenna") is a method widely used in mobile cellular systems (U.S. patent No. 4,249,181). The down-tilt antenna radiates signal downward, contains its signal within its own cell and limits its signal radiating to its adjacent cells, so as to reduce interferences in a cellular system. Document US 2002/0097191 describes a base station comprising first and second antennas vertically separated and radiating both downwards to limit interference. Whilst helping to reduce interferences, down-tilt antenna comes at a price. As its beam points downward to the ground, space above the down-tilt antenna is suffered by sharply reduced radio signals, especially near the boundary of its cell. The space coverage pattern of a cell when using the down-tilt antenna is just like a big dome (as shown in FIG.1C and FIG.1 D), high in the centre but low at the boundary. Radio signal outside cells coverage extents is not strong enough for communications. (Herein after, a cell covered by down-tilt antennas or by antennas without beam tilting is called "ground cell"; a sector covered by down-tilt sector antennas or by sector antennas without beam tilting is called "ground sector", a cellular network composed of ground cells and ground sectors is called "ground cellular network". Word "ground" is to emphasis their coverage target).

Mobile cellular system was developed to provide mobile telecommunications on ground. Its network structure and system design were based on mobility and ground coverage. Traditionally, a mobile cellular network treats its coverage area as a surface and covers ground only. It is basically a two-dimensional coverage network. The world is three-dimensional. There are many high-rise buildings in urban areas, especially in large cities. Limited heights and down tilting of base station antennas make the upper floors of many high-rise buildings out of the coverage range of a mobile cellular network. Though as technology improves, subscriber radio station like mobile phone and BTS are made more and more sensitive to enable them to pick up weaker signal, it has been proved that cellular signal inside the upper floors of many high-rise buildings is too weak to make good quality communications. There are two major additional signal losses besides free space loss, happening between a base station and a mobile phone inside an upper floor of a high-rise building in its cell. One major additional signal loss is penetration loss of the wall and/or window of the high-rise building. It contributes about 20dB loss on average. Another major additional signal loss is due to the down tilting of its base station antenna. The upper floors of many high-rise building are not in the major lobe coverage range of the down-tilt antenna. Instead, they are in the null zone of the down-tilt antenna. Generally, the gain of a cellular base station antenna is 20dB less in its null zone than in its major lobe. It contributes another 20dB loss on average. Cellular signal inside the upper floors of most high-rise buildings is about 40dB lower on average, compared with cellular signal on ground in the same location. That's why we have difficulty to make cellular phone calls on the upper floors of many high-rise buildings. Whist inside the lower floors of high-rise buildings or inside low-rise buildings, which are under major lobes coverage range of down-tilt antennas, cellular signals suffer only 20dB on average the penetration loss besides free space loss. Cellular signals there are much stronger than inside the upper floors of most high-rise buildings in the same area. You can make good quality cellular phone calls there in most situations. 20dB makes a significant difference in radio communications, especially in weak radio signal environments like indoors. The existing mobile cellular network needs to be modified to solve the coverage problem in the upper floors of high-rise buildings. (Antenna major lobe is the lobe of the antenna radiation pattern, which containing the maximum radiation energy. Sometimes it is also called "main lobe" or "beam").

In rural areas, where telecommunication traffics are low, cells are designed as large as possible to cover a wider area. Base station antennas generally down-tilt small angles or don't tilt at all. In urban areas, where telecommunication traffics are high, cells are designed much smaller than in rural areas. Most base station antennas down-tilt relatively larger angles than in rural areas to contain their radiations within small cells and to avoid interferences. As concerns of interferences, cell size, aesthetics, cost and location availability, base station antennas are generally mounted on rooftops in heights from 20 meters to 40 meters above ground. That leaves the upper floors of many high-rise buildings in urban areas, especially in big cities, out of mobile cellular network coverage range in space. The reality is the absence of or weak cellular signal coverage in the upper floors of many high-rise buildings. People work and live there. As mobile phone becomes so popular worldwide, mobile cellular signal coverage in high-rise building is now a major concern for both service providers and their customers.

A system and method called "distributed antenna system" (DAS) has been used to provide mobile cellular signal indoor coverage in high-rise buildings. It introduces cellular radio signal inside buildings from a microcell base station or a repeater via RF (radio frequency) cables and/or fibres. Generally, it needs a microcell base station or a repeater, a long and complicated radio signal distribution network and many indoor antennas. Radio signal strength is limited to cover small areas around the indoor antennas. Unfortunately, the DAS system is not a cost-effective solution for high-rise building coverage. The microcell base station or repeater and the distribution network are very expensive. Rentals of equipment rooms to host the microcell base station or repeater and the distribution network in high-rise buildings are very expensive as well. It also requires permission from landlords to run the distribution network. The installation expenses are prohibitive. To achieve full coverage in all buildings, you have to run this system floor-by-floor and building-by-building at extraordinary expenses. The paid traffics in the coverage areas of the DAS system are limited. In most situations, revenue generated from the DAS system simply cannot compensate its investment. That's why it is not commonly implemented.

There is a need of a more practical, cost-effective solution for cellular signal coverage in upper floors of high-rise buildings for a cellular system.

### Summary

A cellular telecommunication network (simply called "cellular network) of this invention has the feature that at least one of its base stations has a 3D (three-dimensional) space coverage extent on ground and above ground, while eliminating interferences by sharing the transmitters and receivers of the base station between its down-tilt antenna and up-tilt antenna and by beam down-tilting and up-tilting of its base station antennas. It may further have another feature that at least another one of its base stations has coverage extent in a space above ground, while eliminating interferences by beam up-tilting of its base station antenna. So the cellular network of this invention provides a cost-efficient solution for 3D space coverage in a geographical area, especially coverage of the upper floors of high-rise buildings in city.

This invention also provides method and base station to set up the cellular telecommunication network with the features described above.

A cellular telecommunication network of this invention comprises a plurality of base stations in a geographical area. It provides cellular telecommunication services in the geographical area. The geographical area is divided into a plurality of cells. Each base station provides radio signals to subscriber stations in its cell. At least one base station of the cellular network has a 3D space coverage extent on ground and above ground in its cell. The base station comprises a transmitter, a down-tilt antenna and an up-tilt antenna. The transmitter generates a radio signal to be provided within the cell of the base station, and within a frequency range that is reusable in more than one of the cells of the cellular network. The down-tilt antenna is coupled to the transmitter for radiating the radio signal in a characteristic radiation pattern having its major lobe pointed downward. The up-tilt antenna is coupled to the transmitter for radiating the radio signal in a characteristic radiation pattern having its major lobe pointed upward, so as to radiate the radio signal within the cell of the base station below the down-tilt antenna and above the up-tilt antenna, while limiting radiation of the radio signal into other cells of the cellular network within which the radio signal may interfere with radio signals from other base stations of the cellular network. The base station further comprises a receiver for receiving radio signals generated by subscriber stations in its cell. The receiver may be coupled to both the up-tilt antenna and the down-tilt antenna, so as to receive the radio signals generated by subscriber stations in the cell of the base station through at least one of the two antennas. Both antennas may be substantially collocated. The down-tilt antenna may be located above the up-tilt antenna in altitude. The two antennas may be integrally formed into one antenna. (Radio signal, or sometimes simply called "signal", is detectable radio energy that carry information generated by a transmitter or by a subscriber radio station. Antenna radiation pattern is the variation of the field intensity of the antenna as an angular function with respect to the axis.)

The cellular network of this invention may further comprise at least another one of its base stations, which has coverage extent in a space above ground. The base station comprises a transmitter and an up-tilt antenna. The transmitter generates a radio signal to be provided within the cell of the base station, and within a frequency range that is reusable in more than one of the cells of the cellular network. The up-tilt antenna is coupled to the transmitter for radiating the radio signal in a characteristic radiation pattern having its major lobe pointed upward, so as to radiate the radio signal within the cell of the base station above the up-tilt antenna, while limiting radiation of the radio signal into other cells of the cellular network within which the radio signal may interfere with radio signals from other base stations of the cellular network. The base station further comprises a receiver for receiving radio signals generated by subscriber stations in its cell.

A method of this invention, for providing cellular telecommunication service in a geographical area where is divided into a plurality of cells, comprises the flowing process: generating a plurality of radio signals in a frequency range which is reusable in more than one of the cells, wherein each radio signal is to be provided to subscriber stations in its cell; providing each radio signals to its cell. Wherein one of the radio signals is provided to its cell by radiating it from a down-tilt antenna in a characteristic radiation pattern having its major lobe pointed downward, and by radiating it from an up-tilt antenna in a characteristic radiation pattern having its major lobe pointed upward. So the radio signal is radiated within its cell below the down-tilt antenna and above the up-tilt antenna, while being limited its radiation into other cells within which it may interfere with other radio signals. The method further comprises the process of receiving at least one radio signal from a subscriber station in the cell. The radio signal from the subscriber station may be received through at least one of the down-tilt antenna and up-tilt antenna. Both antennas may be substantially collocated. The down-tilt antenna may be above the up-tilt antenna in altitude. The down-tilt antenna and the up-tilt antenna may be integrally formed into one antenna.

The method of this invention may further comprise the following process: providing another radio signal to its cell by radiating it in a characteristic radiation pattern having its major lobe pointed upward from an up-tilt antenna of the cell, so as to radiate it within its cell above the up-tilt antenna, while limiting its radiation into other cells within which it may interfere with other radio signals.

A base station of a cellular telecommunication network of this invention comprises a transmitter, a down-tilt antenna and an up-tilt antenna. The cellular network is adapted to providing a plurality of cellular radio signals in a geographical area where is divided into a plurality of cells. The transmitter generates a radio signal to be provided within the cell of the base station. It operates at a frequency range that is reusable in more than one of the cells. The down-tilt antenna is coupled to the transmitter for radiating the radio signal in a characteristic radiation pattern having its major lobe pointed downward. The up-tilt antenna is coupled to the transmitter for radiating the radio signal in a characteristic radiation pattern having its major lobe pointed upward. So the radio signal is radiated within the cell of the base station below the down-tilt antenna and above the up-tilt antenna, while being limited its radiation into other cells within which it; may interfere with other radio signals of the cellular network. The base station further comprises a receiver for receiving radio signals generated by subscriber stations in its cell. The receiver may be coupled to the down-tilt antenna and the up-tilt antenna, so as to receive the radio signals generated by subscriber stations in the cell of the base station through at least one of the down-tilt antenna and up-tilt antenna. The down-tilt antenna and the up-tilt antenna may be integrally formed into one antenna.

This invention further provides a multi-beam multi-tilt base station antenna, which has at least two beams in two different directions. It may be used in a cellular base station to replace a down-tilt antenna and an up-tilt antenna for providing 3D space coverage with single antenna. When it is used in a cellular base station, one of its beams points downward to cover ground, another one of its beams points upward to cover space above ground. (Antenna beam, also called antenna major lobe, is the radiation lobe containing major radiation energy in confined small angle in at least one dimension).

### Brief Description of The Drawings

FIG.1A (prior art): A typical base station of a mobile cellular system and its coverage.
FIG.1B (prior art): The lobe pattern in elevation of the down-tilt sector antenna in FIG.1A.
FIG.1C (prior art): The schematic 3D coverage shape of a typical ground cell of a mobile cellular system.
FIG.1D (prior art): The schematic 3D coverage shape of a ground mobile cellular network.
FIG.2A: Up-tilt sector antenna covers the upper floors of high-rise buildings.
FIG.2B: Up-tilt omni-directional antenna covers the upper floors of high-rise buildings.
FIG.2C: Up-tilt transmitting and receiving sector antennas cover the upper floors of high-rise buildings.
FIG.2D: The lobe pattern in elevation of the up-tilt sector antenna in FIG.2A.
FIG.2E: The schematic 3D coverage shape of an upward cell of this invention.
FIG.2F: The schematic 3D coverage shape of an upward cell and sectors of this invention.
FIG.2G: The schematic 3D coverage shape of an upward cellular network of this invention.
FIG.3A: The space coverage profile in elevation with an upward cellular network overlaying on a ground cellular network in first way.
FIG.3B: The space coverage profile in elevation with an upward cellular network overlaying on a ground cellular network in second way.
FIG.3C: The space coverage profile in elevation with an upward cellular network overlaying on a ground cellular network in third way.
FIG.3D: The space coverage profile in elevation with an upward cellular network overlaying on a ground cellular network in fourth way.
FIG.4A: An embodiment of the method and the shared base station of this invention for eliminating interference between an upward cell and a ground cell.
FIG.4B: An embodiment of the method and the shared base station transmitters and receivers of this invention for eliminating interference between an upward cell and a ground cell.
FIG.4C: An embodiment of the method for eliminating interference between an upward cell and a ground cell by using dedicated frequencies or frequency spectra in an upward cellular network.
FIG.5A: A system structure embodiment of an upward cellular network of this invention.
FIG.5B: A system integration embodiment of an upward cellular network and a ground cellular network.
FIG.5C: A system integration embodiment of an upward cellular network and a ground cellular network.
FIG.5D: A system integration embodiment of an upward cellular network and a ground cellular network.
FIG.6A (prior art): A typical base station sector antenna, its beam pattern and coverage
FIG.6B: An embodiment of the method for high-rise building coverage with a narrow beam antenna.
FIG.7A: An embodiment of the multi-beam multi-tilt antenna of this invention in single band.
FIG.7B: The lobe pattern in elevation of the antenna in FIG.7A.
FIG.7C: An embodiment of the multi-beam multi-tilt antenna of this invention in dual bands.
FIG.7D: The lobe pattern in elevation of the antenna in FIG.7C.
FIG.7E: An embodiment of mechanical beam tilting means of the multi-beam multi-tilt antenna.
FIG.7F: An embodiment of electrical beam tilting means of the multi-beam multi-tilt antenna.

### Detailed Descriptions

FIG.1A to FIG.1 D describe prior art and its problem.

FIG.1 A is an embodiment of a typical base station of a mobile cellular system and its coverage. Down-tilt sector antenna 1 connects to BTS 5 with RF cable 4. It is mounted on mast 3. Its beam is down-tilted β degree below the horizontal plane from its mounting position. Its beam covers ground, low-rise building 20a and the lower floors of high-rise buildings 20 in its ground sector. Its beam does not cover the upper floors of high-rise buildings 20. Antenna 1 acts as both transmitting and receiving antennas. Arrow 51 is beam (or major lobe) axis. (A sector antenna has a radiation pattern that is directional in both azimuth and elevation. Beam or major lobe axis is the maximum radiation power direction of the beam or major lobe).

FIG.1B is an embodiment of the lobe pattern in elevation of the down-tilt sector antenna 1 in FIG.1A in both transmitting and receiving directions. Because there is reciprocity between the transmitting and receiving characteristics, an antenna has the same lobe pattern in both transmitting and receiving directions. Major lobe 6 of sector antenna 1 is down-titled β degree below a horizontal plane. (The major lobe direction is its maximum power radiation direction). While 7 is its first upper side lobe; 8 is its first lower side lobe; 9 is its backside lobe. Arrow 51 is major lobe axis. Notice the null between major lobe 6 and first upper side lobe 7 is just around the horizontal plane. It is the space area where are the upper floors of many high-rise buildings. Generally, cellular signal strength in this null zone is 20dB lower than the maximum signal strength of the major lobe. So down-tilting of base station antennas in a cellular system makes cellular signal in the upper floors of most high-rise buildings 20dB lower in strength on average than cellular signal in the lower floors of high-rise buildings or in low-rise buildings in the same area. A coordinate XY is shown as a reference (axis X represents horizontal direction and axis Y represents elevation direction).

FIG.1C is an embodiment of the schematic 3D coverage shape of a typical ground cell of a mobile cellular system. The area and space covered by down-tilt omni-directional antenna 2, form ground cell 11. It may have a shape like a big dome that is high in centre and low around boarder. While 13 is the boarder of ground cell 11. Antenna 2 connects to BTS 5 and is mounted at a height h1 above ground. Ground cell 11 does not cover space higher than h1. Its coverage height decreases as the distance from its cell centre increases. Because of reciprocity between the transmitting and receiving characteristics of an antenna, ground cell 11 has proximately the same coverage shape and range in both transmitting and receiving directions. (An omni-directional antenna has a radiation pattern that is non-directional in azimuth. Its vertical radiation pattern may be of any shape).

FIG.1 D is an embodiment of the schematic 3D coverage shape of a ground mobile cellular network in both transmitting and receiving directions. A plurality of ground cells juxtapose on the earth's surface composing a ground mobile cellular network. These ground cells cover only the space under their down-tilt base station antennas. The coverage near their cell boundaries is worse in both signal strength and coverage height. As described before, a ground mobile cellular network doesn't cover the upper floors of many high-rise buildings. It is a problem to be solved. The intention of this invention is to solve this problem in a cost-efficient manner. The ground mobile cellular network has proximately the same coverage shape and range in both transmitting and receiving directions.

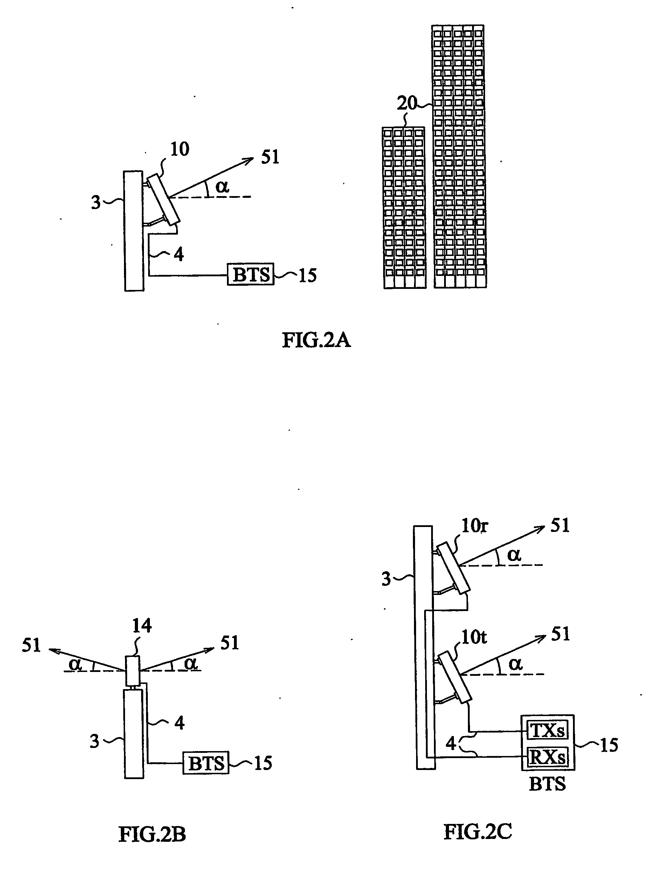

FIG.2A to 2G illustrate the first basic concept of this invention: Base station antenna has its major lobe point upward to cover the upper floors of high-rise buildings to increase cellular signal strength there; space above ground in a geographical area is divided into a plurality of small service spaces - upward cells; each upward cell is covered by one or a plurality of upward major lobes of base station antennae in both transmitting and receiving directions; a plurality of upward cells composes an upward cellular network and covers space above ground in the geographical area. Whereby, an upward cellular network provides cellular signal coverage in space above ground, especially in upper floors of most high-rise buildings, in the geographical area for a mobile cellular system.

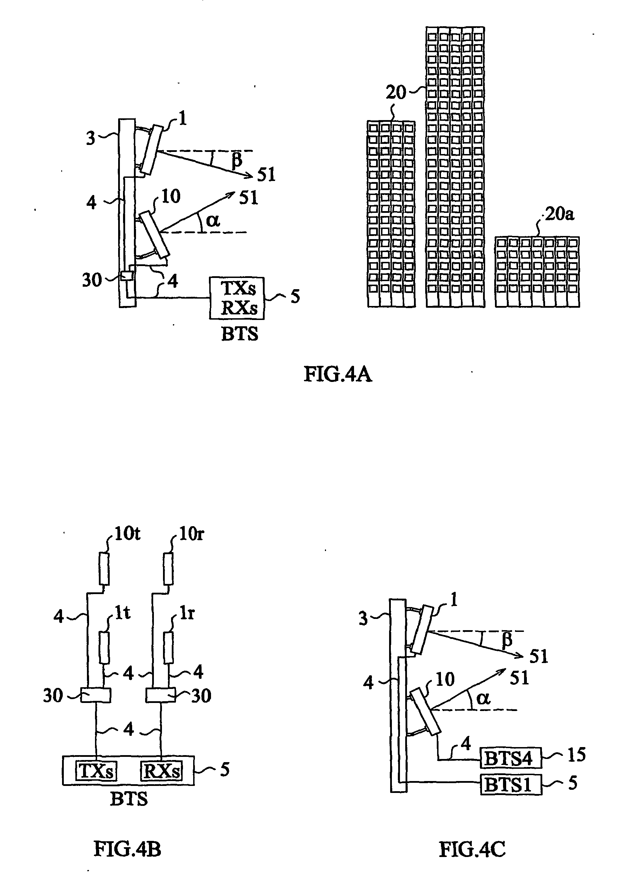

FIG.4A to 4C illustrate the second basic concept of this invention: An up-tilt antenna and a down-tilt antenna are coupled together and then connect to base station transceivers. That is they share base station transceivers, so as to share cellular frequencies or frequency spectrum and avoid interference. They may share the whole BTS or part of it of a base station. The up-tilt antenna covers space above ground, or upward cell; the down-tilt antenna covers ground, or ground cell. Because both antennas share the same radio signal source, no interference will happen between the upward cell and the ground cell. This interference elimination technique and the interference elimination technique of beam down-tilting and beam up-tilting can be combined to use to eliminate interferences in the whole cellular network.

A base station of a mobile cellular system comprises at least a BTS, at least one transmitting antenna and at least one receiving antenna. Each BTS comprises at least one transmitter and at least one receiver. The transmitting antenna is coupled to the transmitters and transmits the radio signals generated by the transmitters into its cell; the receiving antenna is coupled to the receivers and receives the radio signals generated by subscriber stations in its cell. Both have proximately the same radiation characteristic pattern. They are mounted on an antenna supporting structure. The transmitters generate cellular radio signal to be provided in its cell within a frequency range that is reusable in more than one of the cells of the mobile cellular network. The radio signal generated by the transmitters radiates from the transmitting antenna in a radiation characteristic pattern having its major lobe point upward above the transmitting antenna in its cell. The receivers receive radio signals generated by the subscriber stations in its cell through the receiving antenna. A base station antenna is often used as both transmitting and receiving antennas.

As it has been discussed before, cellular signal strength will increase up to 20dB on average in the upper floors of high-rise buildings if a base station antenna is up-tilted to have its major lobe cover there. Because of reciprocity between the transmitting and receiving characteristics of the antenna, the strength of received radio signals generated from the subscriber stations (mobile phones, for example) there and received by the base station antenna will increase up to 20dB on average as well in the base station receivers, if the base station antenna is used as both transmitting and receiving antennas. It will significantly change cellular telecommunication conditions there. One up-tilted base station antenna can cover the upper floors of many high-rise buildings in its cell. It is a cost-efficient coverage solution and easy to be implemented. (Herein after, a beam up-tilted base station antenna simply called "up-tilt antenna"; a beam up-tilted base station sector antenna simply called "up-tilt sector antenna").

The radio communication process between a base station and a subscriber station in a mobile cellular system is a well-known art. It is not the scope of this invention. In most situations, antenna is used as both transmitting and receiving antennas in cellular base stations. It has the same gain and direction selection in transmitting and in receiving. It will reject radio signal from a subscriber station outside its coverage range. For example, an up-tilt antenna will reject radio signal from a subscriber station on the ground in its cell. The up-tirt antenna can be used as a way to eliminate interferences among cells in a mobile cellular network, just the same way as the down-tilt antenna does. Separate transmitting and receiving antennas may be used in a base station for certain reason. They may have different characteristics in order to balance the differences between downlink (from base station to subscriber station) and uplink (from subscriber station to base station). In no matter what situations, it is preferred that a base station has same coverage shape and extent in both transmitting and receiving directions in a mobile cellular network.

Space above ground is treated as three-dimensional in coverage in this invention. Besides the ground cells and ground sectors, concepts of upward cell and upward sector are introduced in this invention. An upward cell is a predefined space above ground and covered by one or a plurality of major lobes pointing upward from one or a plurality of base station antennas. An upward cell can be divided into multiple upward sectors (three upward sectors, for example). An upward sector is a predefined space above ground within an upward cell and covered by one or a plurality of major lobes pointing upward from one or a plurality of base station sector antennas. Each upward cell comprises at least a BTS and at least one antenna (transmitting and receiving). The antenna is coupled to the BTS and mounted on an antenna supporting structure. Each upward sector comprises a BTS and at least one sector antenna (transmitting and receiving). The sector antenna is coupled to the BTS and mounted on an antenna supporting structure. Except coverage differences, upward cell and sector have no significant differences from ground cell and sector. In a network level, like ground area divided into ground cells, space above ground in a geographical area is divided into a plurality of small service spaces - upward cells in a mobile cellular system in this invention. A plurality of upward cells composes an upward cellular network. It covers space above ground in a geographical area for a mobile cellular system. Cellular frequencies or frequency spectra are reused among the upward cells if necessary (depends on cellular system type and upward cellular network scale). The upward cellular network may adopt a similar frequency reuse plan as the existing ground cellular network does to eliminate interferences among the upward cells, like 7/21 or 4/12 frequency reuse plan used in a GSM cellular system. It is preferred in this invention to adjust base station antenna height and its major lobe up-tilt angle to eliminate interferences among upward cells within certain altitude (depends on application case). The upward cellular network further comprises at least one control centre. The control centre connects with each base station of the upward cellular network. It may connect with other communication systems too. The control centre controls communications of base stations and subscriber stations of the upward cellular network. It also controls communications between its mobile cellular system and other systems. How the control centre controls communications in the upward cellular network is a well-known art. It is not the scope of this invention. The existing ground cellular network covers ground. The upward cellular network may integrate with it to expand its coverage to space above ground in a geographical area. Both cellular networks may share a common system control centre.

In application for high-rise building coverage for a mobile cellular system, the upward major lobe from a base station antenna points to the upper floors of the high-rise buildings in its upward cell. Each upward cell serves the subscriber stations of the mobile cellular system in the upper floors of the high-rise buildings in its upward cell; each upward sector serves the subscriber stations of the mobile cellular system in the upper floors of the high-rise buildings in its upward sector. It is preferred in this invention to adjust an up-tilt antenna height and its major lobe up-tilt angle to maximize its coverage in the upper floors of the high-rise buildings in its upward cell and minimize its coverage in the high-rise buildings outside its upward cells. The existing ground cellular network covers ground, low-rise buildings and the lower floors of high-rise buildings already. An upward cellular network can integrate with it to expand its coverage to the upper floors of most high-rise buildings in a geographical area. They may share a common system control centre. The upward cellular network may be employed in other applications. For example, an upward cellular network may be implemented in a non-terrestrial mobile cellular system for space coverage.

FIG.2A illustrates the basic concept of this invention: Up-tilt antenna covers the upper floors of high-rise buildings. Sector antenna 10 connects to BTS 15 with RF cable 4. It is mounted on mast 3. It has its beam up-tilt α degree (10°, for example) above the horizontal surface from its mounting position and point to the upper floors of high-rise buildings 20 in its upward sector (or upward cell). Arrow 51 is beam (or major lobe) axis. Cellular signals generated by the transmitters of BTS 15 are radiated upward through antenna 10 and are provided to the subscriber stations in the upper floors of high-rise buildings 20 in its upward sector (or upward cell). The receivers of BTS 15 receive cellular radio signals generated by the subscriber stations in the upper floors of high-rise buildings 20 in its upward sector (or upward cell) through antenna 10. Though up-tilted mechanically as shown in FIG.2A, the antenna beam may be up-tilted electrically, or in both ways. Instead of mast 3, antenna 10 may be mounted on any antenna supporting structure like a tower or rooftop etc. Though the coverage targets of antenna 10 are high-rise buildings in FIG.2A, they may be towers or any high-rise construction on the ground. In FIG.2A, antenna 10 acts as both transmitting and receiving antennas. It has proximately the same direction selection in transmitting and receiving radio signal. BTS 15 has proximately the same coverage range in both transmitting and receiving directions. That means its upward sector (or upward cell) has proximately the same coverage shape and range in both transmitting and receiving directions.

FIG.2B illustrates the same concept as FIG.2A does, but up-tilt sector antenna 10 is replaced by up-tilt omni-directional antenna 14. Antenna 14 provides cellular signal coverage in an upward cell.

FIG.2C illustrates the same concept as FIG.2A does, but base station 15 uses separate transmitting sector antenna 10t and receiving sector antenna 10r. Antenna 10t has its beam point upward α degree (10°, for example) above the horizontal plane from its mounting position and cover its upward sector (or upward cell). It connects to the transmitters (TXs) of BTS 15 via RF cable 4. Antenna 10r has its beam point upward the same α degree above the horizontal plane from its mounting position and cover its upward sector (or upward cell). It connects to the receivers (RXs) of BTS 15 via RF cable 4. Both antennas are mounted on mast 3. They have proximately the same direction selection. Arrow 51 is beam (or major lobe) axis. Cellular signals generated by the transmitters of BTS 15 are radiated upward above antenna 10t and are provided to the subscriber stations in its upward sector (or upward cell). The receivers of BTS 15 receive cellular radio signals generated by subscriber stations in its upward sector (or upward cell) through antenna 10r. Though antenna 10t and 10r may have different gains, it is preferred they have proximately the same coverage range, so as to have a balance between uplink and downlink.

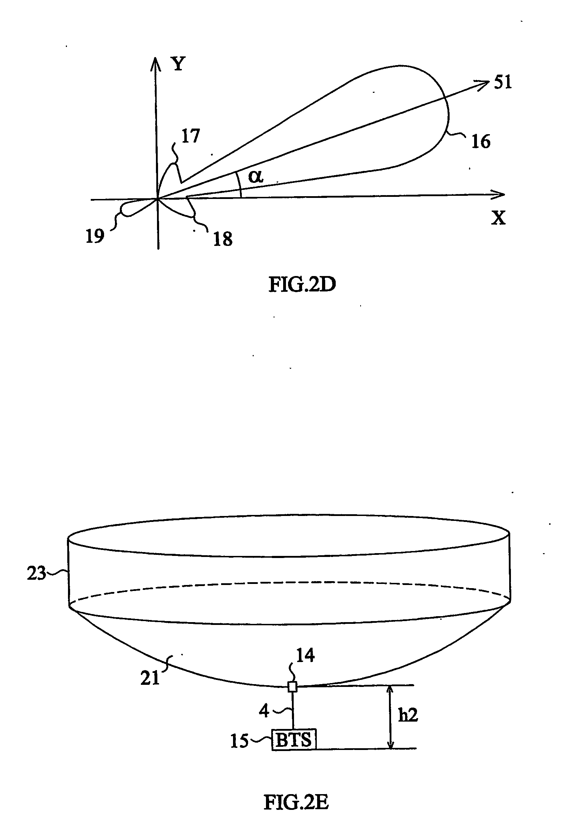

FIG.2D is an embodiment of the lobe pattern in elevation of up-tilt sector antenna 10 in FIG.2A in both transmitting and receiving directions. Major lobe 16 is up-tilted α degree above a horizontal plane. While 17 is first upper side lobe;18 is first lower side lobe; 19 is backside lobe. Arrow 51 is major lobe axis. It is preferred in this invention that, by adjusting antenna up-tilt angle to make the null between major lobe 16 and first lower side lobe 18 occur around the horizontal plane from the antenna mounting position. It will minimize cellular signal strength around the horizontal plane in the antenna mounting height, so as to limit cellular signal radiating into other upward cells or ground cells and minimize possible interferences. A coordinate XY is shown as a reference (axis X represents horizontal direction and axis Y represents elevation direction).

FIG.2E is an embodiment of the schematic 3D coverage shape of an upward cell of this invention in both transmitting and receiving directions. The space covered by up-tilt omni-directional antenna 14 forms upward cell 21. It may have a shape like a big dome but upside down. While 23 is its boarder. Antenna 14 connects to BTS 15 and is mounted at height h2 above ground. Upward cell 21 may not cover space lower than h2. Its no-coverage height increases as distance from its cell centre increases. It is preferred in this invention that an upward cell has proximately the same coverage shape and range in both transmitting and receiving directions.

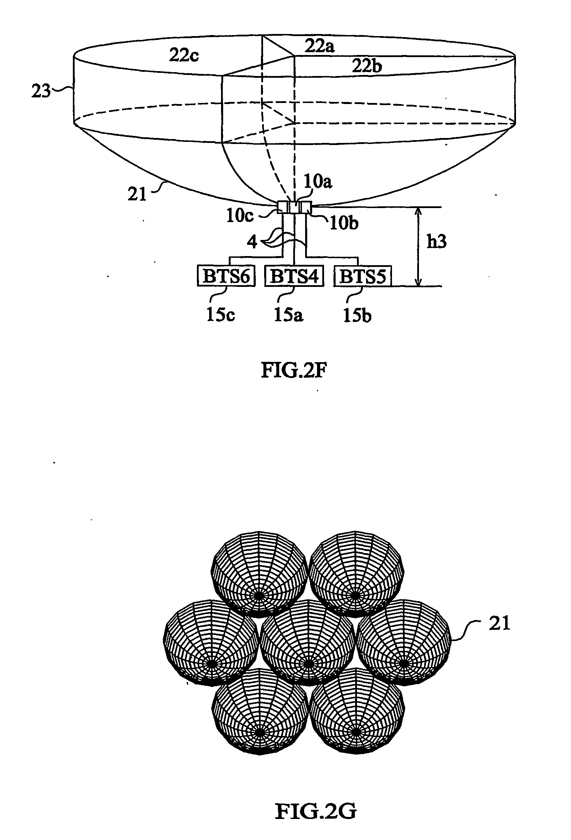

FIG.2F is an embodiment of the schematic 3D coverage shape of an upward cell and its upward sectors. Upward cell 21 is divided into three upward sectors 22a, 22b and 22c. Up-tilt sector antenna 10a connects to BTS4 15a and covers upward sector 22a; up-tilt sector antenna 10b connects to BTS5 15b and covers upward sector 22b; up-tilt sector antenna 10c connects to BTS6 15c and covers upward sector 22c. While 23 is the boarder of upward cell 21. Three up-tilt sector antennas are mounted at height h3 above ground. It is preferred in this invention that an upward cell and sector has proximately the same coverage shape and range in both transmitting and receiving directions.

FIG.2G is an embodiment of the schematic 3D coverage shape of an upward cellular network. A plurality of upward cells 21 juxtaposes on the earth's surface, composes an upward cellular network. It is preferred in this invention to properly adjust antenna height and its beam up-tilt angle to maximize signal radiation in its upward cell and to limit signal radiation outside its upward cell. Like down-tilt antennas and down-tilt sector antennas eliminating interferences among ground cells, up-tilt antennas and up-tilt sector antennas can also eliminate interferences among upward cells within certain altitude (the maximum high-rise building height, for example) in a geographical area. The upper floors of most high-rise buildings in a geographical area will be covered by the upward cellular network. It solves the problem of high-rise building coverage, which has been existed for a long time in a mobile cellular system, in a cost-efficient way. It is preferred that an upward cellular network has proximately the same coverage shape and range in both transmitting and receiving directions.

An upward cellular network may be necessary only in urban area in a mobile cellular system. Limited coverage targets (high-rise buildings) make the upward cellular network much smaller in scale, compared with a ground cellular network in the same area. It helps to reduce interferences amongst upward cells and between upward cells and ground cells. In a medium or small city, all necessary upward cells may be within a cluster. (A cluster has seven cells in 7/21 frequency reuse plan). In this case, no cellular frequency need to be reused in an upward cellular network for a FDMA or TDMA mobile cellular system. A single upward cell or upward sector may be enough to cover few high-rise buildings in an isolated rural area. The upward cell, upward sector and upward cellular network of this invention can be implemented in various type of mobile cellular systems to provide cellular signal coverage in the upper floors of high-rise buildings.

Theoretically, cellular frequency or frequency spectrum should be reused among upward cells in an upward cellular network. In a real upward cellular network, whether cellular frequency or frequency spectrum is reused or not depends on system type, structure and scale of the upward cellular network. For example, if a mobile cellular system is CDMA system, then the same spread spectrum is reused among all upward cells in a geographical area. For TDMA or FDMA mobile cellular system, cellular frequency may be reused among upward cells if the upward cellular network is larger than a cluster. A large scale upward cellular network is necessary in a large city where are many high-rise buildings in a wider urban area.

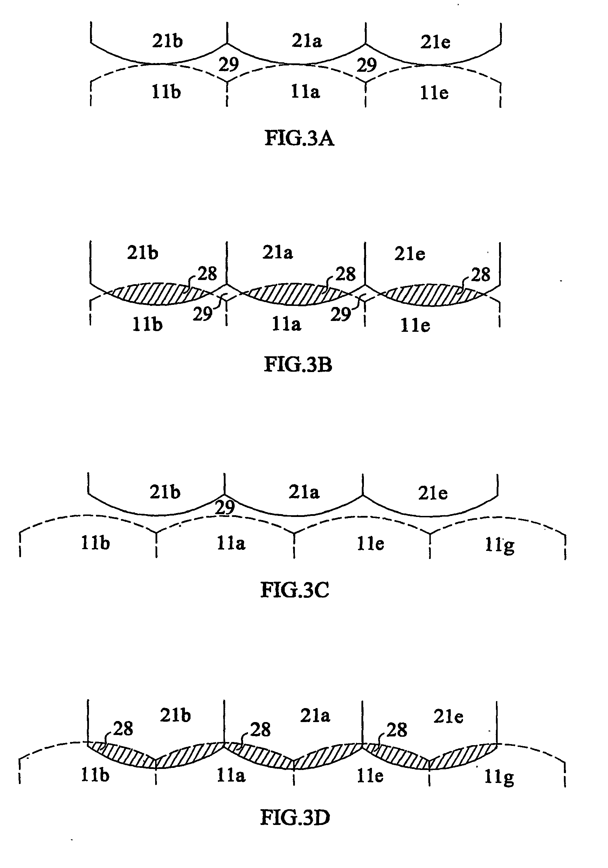

FIG.3A to 3D are embodiments of space coverage profile in elevation when an upward cellular network overlay on a ground cellular network in different ways. To expand coverage of a ground mobile cellular system to space above ground, especially to the upper floors of high-rise buildings, an upward cellular network may overlays on the existing ground cellular network. There are many possible ways to overlay an upward cellular network on a ground cellular network. FIG.3A to 3D are four examples.

In FIG.3A, an upward cell overlay on a ground cell with their base station antennas of both cells in proximately the same height at proximately the same locus. Upward cells 21 b, 21 a and 21 e (the continued line areas) lay on ground cells 11b, 11a, 11e (the dashed line areas) respectively. Interspaces 29 are the space not covered by both upward and ground cells. In FIG.3A, base station of an upward cell is collocated with base station of a ground cell.

FIG.3B shows the same scenario as FIG.3A does, except base station antenna of an upward cell is below base station antenna of a ground cell in proximately the same locus. Overlapped spaces 28 (hatched areas) are the space covered by both upward and ground cells. The overlaying advantage in FIG.3A and FIG.3B is that the upward cell can share all or part of the existing base station facility of the ground cell, like equipment room, power supply, tower and carrier etc. As shown in FIG.4A, even the existing BTS of the ground cell can be shared. The way of overlaying in FIG.3B provides better space coverage than the way of overlaying in FIG.3A, as less space is left uncovered in FIG.3B.

In FIG.3C, an upward cell centre locates near the boarder between two ground cells with base station antennas of both upward cells and ground cells in proximately the same altitude. The centre of upward cell 21 b is near the boarder between ground cell 11 b and 11 a; the centre of upward cell 21 a is near the boarder between ground cell 11a and 11e; the centre of upward cell 21 e is near the boarder between ground cell 11e and 11g. Interspaces 29 are the spaces not covered by both upward and ground cells.

FIG.3D shows the same scenario as FIG.3C does, except the base station antenna of an upward cell is below the base station antenna of a ground cell in altitude. Overlapped spaces 28 (hatched areas) are the space covered by both upward and ground cells. The overlaying advantage in FIG.3C and FIG.3D is that you have freedom to choose the location of an upward cell base station. The way of overlaying in FIG.3D provides better space coverage than the way of overlaying in FIG.3C, as more space is covered in FIG.3D.

A practical upward cellular network may combine the various overlaying strategies to achieve cost-efficiency and flexibility for high-rise buildings coverage.

FIG.4A illustrates an important content of this invention: A shared base station between an upward cell (or upward sector) and a ground cell (or ground sector), and a method for avoiding frequency interference between an upward cell and a ground cell. It is also a method to share cellular frequencies or frequency spectra and base station apparatuses between an upward cell and a ground cell whilst eliminating frequency interference between them.

As available frequency spectra to each mobile cellular system are limited and the fact that almost all frequency spectra have been fully exploited in the existing ground mobile cellular systems, especially in urban areas, an upward cellular network may have to share cellular frequencies or frequency spectra with a ground cellular network. This brings out a new problem: frequency interferences between them. It is easily solved by this invention. The solution is that an upward cell and a substantially collocated ground cell share all or part of base station transmitters and receivers. That is they share the whole BTS or part of it. The shared transmitters and receivers comprise at least one control channel and at least one traffic channel of the mobile cellular system. A transmitting antenna of the upward cell and a transmitting antenna of the ground cell are coupled together with a splitter/combiner or a coupler (evenly or unevenly splitting/combining RF signal) and then connect to the shared transmitters (TXs); a receiving antenna of the upward cell and a receiving antenna of the ground cell are coupled together with a splitter/combiner or a coupler and then connect to the shared receivers (RXs). In this solution, an upward cell becomes the extension of a ground cell in space above ground. No interference is introduced between them. Cellular signals generated by the shared transmitters are radiated upward above the transmitting antenna of the upward cell and are provided to the subscriber stations in the upward cell; they are also radiated downward below the transmitting antenna of the ground cell and are provided to the subscriber stations in the ground cell. The shared receivers receive cellular radio signals generated by subscriber stations in the upward cell through the receiving antenna of the upward cell; they also receive cellular radio signals generated by subscriber stations in the ground cell through the receiving antenna of the ground cell. In this situation, upward cell and ground cell also share cellular frequencies or frequency spectra and many mobile cellular system apparatuses, like carrier and control centre etc. This solution is very cost-effective and easy to be implemented. The existing mobile cellular system easily expands its coverage to space above ground, especially to upper floors of high-rise buildings, at minimum cost by addition of up-tilt antennas to their base station antenna systems.

FIG.4A is an embodiment of this solution. Up-tilt sector antenna 10 of the upward sector and down-tilt sector antenna 1 of the ground sector are coupled together with splitter/combiner 30 (or coupler) and then connect to the shared transmitters and receivers of BTS 5 with RF cables 4. The beam of antenna 10 is up-tilted α degree (10°, for example) above the horizontal surface from its mounting position and points to high-rise buildings 20 in its upward sector. The beam of antenna 1 is down-tilted β degree (8°, for example) below the horizontal surface from its mounting position and points to ground and low-rise building 20a in its ground sector. Both antennas are mounted on mast 3. Arrow 51 is beam (or major lobe) axis. In FIG.4A, the upward sector becomes the extension of the ground sector in space above ground. Cellular signals generated by transmitters of BTS 5 are radiated upward above antenna 10 and are provided to the subscriber stations in the upward sector; they are also radiated downward below antenna 1 and are provided to the subscriber stations in the ground sector. The receivers of BTS 5 receive cellular radio signals generated by subscriber stations in the upward sector through antenna 10; they also receive cellular radio signals generated by subscriber stations in the ground sector through antenna 1. Whilst mounted below down-tilt antenna 1 in FIG.4A, up-tilt antenna 10 may be mounted above or at the same height as it. Though antenna 1 is shown as a down-tilt sector antenna in FIG.4A, it may be a down-tilt omni-directional antenna. Though antenna 10 is shown as an up-tilt sector antenna in FIG.4A, it may be an up-tilt omni-directional antenna. Though mast 3 shown in FIG.4A, it may be any antenna supporting structure, like a tower or rooftop etc. Though all transmitters and all receivers of BTS 5 are shared in FIG.4A, it may be only part of them to be shared by antenna 1 and antenna 10. In FIG.4A, when a splitter/combiner (or a coupler) is inserted in the antenna system, it will introduce about 3dB loss (when RF signal is evenly split) to the antenna system of the ground sector. As most ground cells and sectors in urban area are small sizes and their base stations use low gain antennas, replacing them with higher gain antennas can easily compensate this loss. In FIG.4A, antenna 1 and antenna 10 each acts as both transmitting and receiving antennas. In this solution, the upward cell (or sector) also shares the network carrier and control centre of the ground cellular network. (Note, the splitter/combiner or coupler here refers to split radio signal power from one way into two or more ways in transmitting direction; and to combine radio signals from two or more ways into one way in receiving direction. Sometimes we call it power divider when radio signal power is evenly divided from one way into two ways. It is a passive device. No signal information is processed in it. In both transmitting and receiving directions, the input radio signal and its output radio signal contain exactly the same information, except the signal strength change and a little time shifting between them because of the radio path inside the splifter/combiner or coupler. In transmitting direction, two ways or more ways output signals split from the same input signal contain exactly the same information, except the signal strength in each way may be different from each other and there may be a little time shifting between them because the radio paths to each way may be slightly different from each other inside the splitter/combiner or coupler).

FIG.4A is also an embodiment of a shared base station between an upward cell (or upward sector) and a ground cell (or ground sector). An upward cell (or upward sector) and a ground cell (or ground sector) share common BTS of a base station. The base station is a shared base station. It may be only part of transmitters and receivers of a shared base station are shared between an upward cell (or upward sector) and a ground cell (or ground sector). The advantage of a shared base station is obvious. It includes coverage expansion, cost saving, frequency saving and interference immunity.

FIG.4B is another embodiment of a shared base station of this invention. Unlike antenna used as both transmitting and receiving antennas in FIG.4A, separate transmitting and receiving antennas are used in a shared base station in FIG.4B. Up-tilt antenna 10t of upward sector (or upward cell) and down-tilt antenna 1t of ground sector (or ground cell) are coupled together with a splitter/combiner 30 (or a coupler) and then connect to the shared transmitters of BTS 5 with RF cables 4; up-tilt antenna 10r of upward sector (or upward cell) and down-tilt antenna 1r of ground sector (or ground cell) are coupled together with another splitter/combiner 30 (or a coupler) and then connect to the shared receivers of BTS 5 with RF cables 4. In this embodiment, antennas 10t and 1t act as transmitting antenna; antennas 10r and 1r act as receiving antenna. Antenna 10t and 10r may have proximately the same up-tilt angle and proximately the same coverage range in upward sector (or upward cell); antenna 1t and 1r may have proximately the same down-tilt angle and proximately the same coverage range in ground sector (or ground cell).

In the situations as shown in FIG.4A and in FIG.4B, the upward sector (or upward cell) covered by the up-tilt antenna and the ground sector (or ground cell) covered by the down-tilt antenna can be considered as one sector (or cell), which has 3D space coverage extent. The upward sector (or upward cell) is the extension of the ground sector (or ground cell) in space above ground. When a subscriber station moves between them, no switching happens. For example, when a person in a mobile phone call moves from the ground floor in one of high-rise buildings 20 to its top floor in FIG.4A, the radio communication link of the phone call keeps between his mobile phone and BTS 5.

Another solution to eliminate interference between upward cellular network and ground cellular network is to use dedicated cellular frequencies or frequency spectra in upward cellular network in a geographical area. For example, some reserved cellular frequency channels that haven't been used in the existing mobile cellular system may be used as dedicated cellular frequencies in upward cellular network. In this solution, upward cellular network may be independent of ground cellular network. Base stations of upward cells can locate at any favourable places in the geographical area. They don't have to collocate with the base stations of ground cells. Upward cellular network may adopt different cellular network structure and frequency reuse plan. For example, upward cellular network may adopt 4/12 frequency reuse plan, whilst ground cellular network adopts 7/21 frequency reuse plan. Upward cellular network may share system control centre of ground cellular network, or it may have its own system control centre.

The two methods described above can be flexibly integrated in a mobile cellular system to achieve cost-efficiency and maximum coverage. That is some upward cells share base stations and system control centre with ground cells; some upward cells have their own base stations and system control centre, or they share system control centre with ground cells.

FIG.2A is also an embodiment that an upward sector uses dedicated frequencies or frequency spectra in its base station.

FIG.2B is also an embodiment that an upward cell uses dedicated frequencies or frequency spectra in its base station.

FIG.4C is another embodiment that dedicated frequencies or frequency spectra are used in the base station of upward cells. In FIG.4C, base station of an upward sector and base station of a ground sector are collocated. Dedicated frequencies of frequency spectra are used in BTS415 of upward sector. Up-tilt sector antenna 10 of upward sector connects to its BTS415 with RF cable 4. Down-tilt sector antenna 1 of ground sector connects to BTS1 5 with RF cable 4. Both antennas are mounted on mast 3. Arrow 51 is beam (or major lobe) axis. Antenna 1 and antenna 10 each acts as both transmitting and receiving antennas. In FIG.4C, BTS415 of upward sector and BTS15 of ground sector are independent of each other. They operate in different cellular frequencies or frequency spectra.

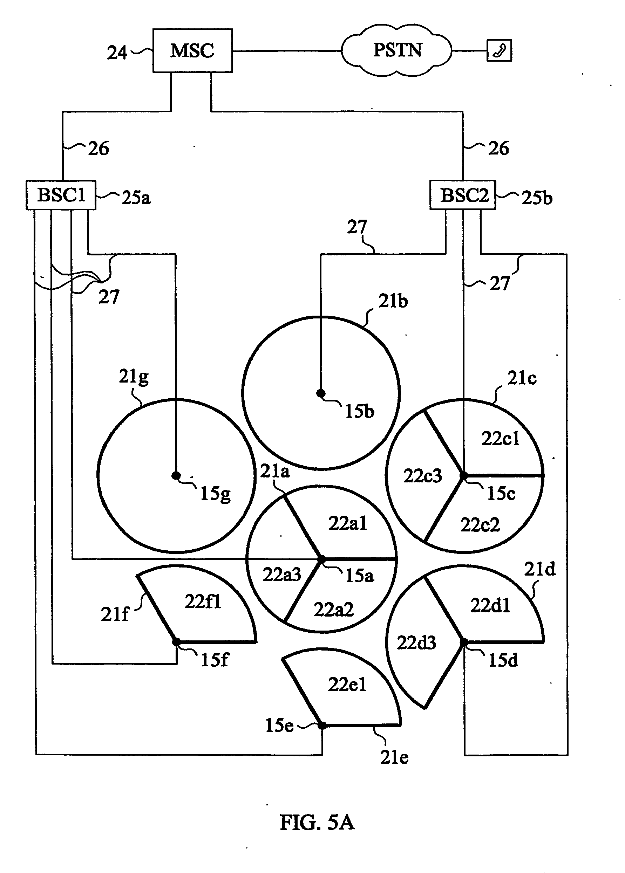

FIG.5A to FIG.5D are embodiments of the system of an upward cellular network and its integrations with the system of a ground cellular network.

Upward cellular network of this invention further comprises at least a control centre (a switch centre, for example). It controls communications of upward cellular network and communications with other systems, like a ground cellular network and PSTN (public switched telephone network) etc. An upward cellular network and a ground cellular network may share a common control centre.

FIG.5A is an embodiment of the system of an upward mobile cellular network of this invention. In FIG.5A, seven upward cells 21 a, 21 b, 21 c, 21 d, 21 e, 21f and 21 g compose an upward mobile cellular network. Upward cells 21 a is divided into three upward sectors 22a1, 22a2 and 22a3; upward cell 21 c is divided into three upward sectors 22c1, 22c2 and 22c3. Upward cell 21 d is not a full cell. It contains only two upward sectors 22d1 and 22d3. Upward cell 21e is not a full cell. It contains only one upward sector 22e1. Upward cell 21f is not a full cell as well. It contains only one upward sector 22f1. Upward cell 21 b and 21 g both are not divided into sectors. Each of them may be covered by an up-tilt omni-directional antenna. Each upward cell has a BTS at proximately its cell centre. They are BTS 15a, 15b, 15c, 15d, 15e, 15f and 15g respectively. BSC1 (base station control centre) 25a controls BTS 15a, 15e, 15f and 15g of respective upward cell 21 a, 21e, 21f and 21g via carriers 27 (cable, fibre, microwave radio etc). BSC2 25b controls BTS 15b, 15c and 15d of respective upward cell 21b, 21c and 21d via carriers 27. MSC 24 controls BSC1 25a and BSC2 25b via carriers 26 (cable, fibre, microwave radio etc). It also connects to PSTN. The structure and operation of the upward mobile cellular system is similar to the existing ground mobile cellular system except its ground cells and sectors are replaced with the upward cells and sectors. How this system works is a well-known art. It is not the scope of this invention.

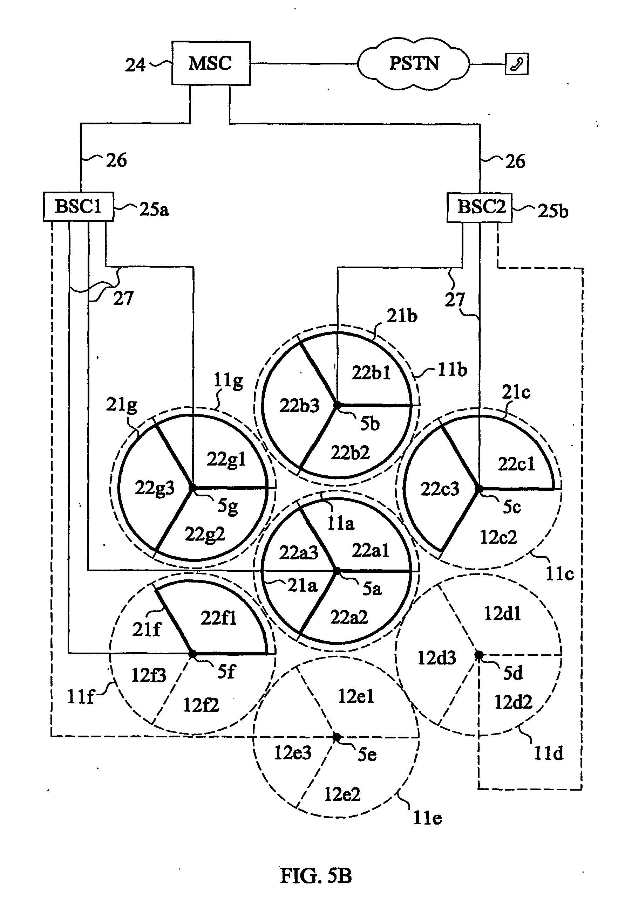

FIG.5B is an embodiment of the integration of an upward mobile cellular system and a ground mobile cellular system. As shown in FIG.5B, the dashed lines and circles represent a ground mobile cellular network; the continuous lines and circles represent an upward mobile cellular network. They are integrated together. The ground mobile cellular network comprises seven ground cells 11a, 11b, 11c, 11d, 11e, 11f and 11g. Each ground cell has a BTS at proximately its cell centre. They are BTS 5a, 5b, 5c, 5d, 5e, 5f and 5g respectively. BSC1 25a controls ground cell 11a, 11e, 11f and 11g via carriers 27. BSC2 25b controls ground cell 11b, 11c and 11d via carriers 27, MSC 24 controls BSC1 25a and BSC2 25b via carriers 26. Each ground cell is divided into three ground sectors. For example, ground cell 11d is divided in ground sectors 12d1,12d2 and12d3. The upward mobile cellular network comprises five upward cells 21 a, 21b, 21c, 21f and 21g. Upward cell 21a is divided into three upward sectors 22a1, 22a2 and 22a3; upward cell 21b is divided into three upward sectors 22b1, 22b2 and 22b3; upward cell 21g is divided into three upward sectors 22g1, 22g2 and 22g3. Upward cell 21c is not a full cell. It contains only two upward sectors 22c1 and 22c3. Upward cell 21f is not a full cell also. It contains only one upward sector 22f1. In this embodiment, each upward cell shares a common BTS with a ground cell. Upward cell 21 a shares BTS 5a of ground cell 11a; upward cell 21 b shares BTS 5b of ground cell 11b; upward cell 21 c shares BTS 5c of ground cell 11c; upward cell 21f shares BTS 5f of ground cell 11f; upward cell 21g shares BTS 5g of ground cell 11g. So the upward mobile cellular network shares BSC1 25a, BSC2 25b and MSC 24 of the ground mobile cellular network as well. This embodiment represents the situation when the up-tilt antennas are coupled together with the antennas of ground cells and/or ground sectors to share the BTSs of some ground cells and/or ground sectors in a mobile cellular system (as shown in FIG.4A). It is the most cost-efficient way to expand the coverage of a mobile cellular network to the upper floors of high-rise buildings. How this system works is a well-known art. It is not the scope of this invention.

FIG.5B is also an embodiment of the shared base station and the method for avoiding interference between upward cellular network and ground cellular network.

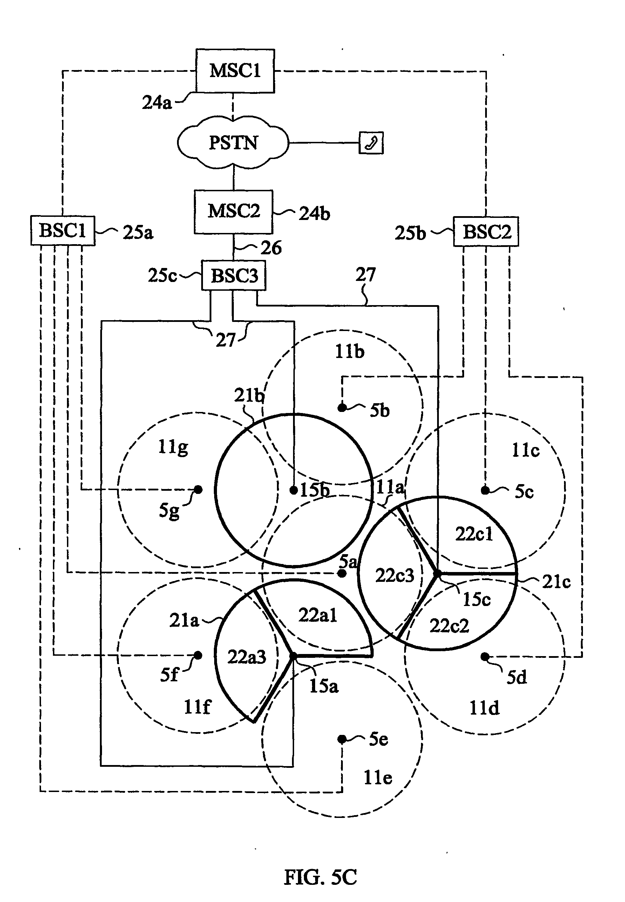

FIG.5C is another embodiment of integration of an upward mobile cellular system and a ground mobile cellular system. As shown in FIG.5C, the dashed lines and circles represent a ground mobile cellular network; the continue lines and circles represent an upward mobile cellular network. They are integrated together. The ground mobile cellular network comprises seven ground cells 11a, 11b, 11c, 11d, 11e, 11f and 11g. Each ground cell has a BTS at proximately its cell centre. They are BTS 5a, 5b, 5c, 5d, 5e, 5f and 5g respectively. BSC1 25a controls ground cell 11a, 11e, 11f and 11g via carriers. BSC2 25b controls ground cell 11b, 11c and 11d via carriers, MSC1 24a controls BSC1 25a and BSC2 25b via carriers. Unlike in FIG.5B, there is no any sharing of BTS, BSC and MSC between the upward cells and the ground cells in FIG.5C. The upward mobile cellular network comprises three upward cells 21 a, 21 b and 21 c. Each upward cell is located proximately near the boarder of ground cells. Upward cell 21a is not a full cell. It contains two upward sectors 22a1 and 22a3. Upward cell 21 b has no sector. It may be covered by an up-tilt omni-directional antenna. Upward cell 21c is divided into three upward sectors 22c1, 22c2 and 22c3. Each upward cell has a BTS at proximately its cell centre (in term of azimuth direction). They are BTS 15a, 15b and 15c respectively. BSC3 25c controls them via carriers 27. The upward mobile cellular network has its own control centre MSC2 24b. It controls BSC3 25c via carrier 26. MSC 24b also connects to PSTN. In this embodiment, the upward mobile cellular system is independent of the ground mobile cellular system.

FIG.5C is also an embodiment of the method for avoiding interference between upward cellular network and ground cellular network by using dedicated frequencies or frequency spectra in upward cellular network. Dedicated frequencies are used in upward cell 15a, 15b and 15c in FIG.5C to avoid interference with the ground cellular network.

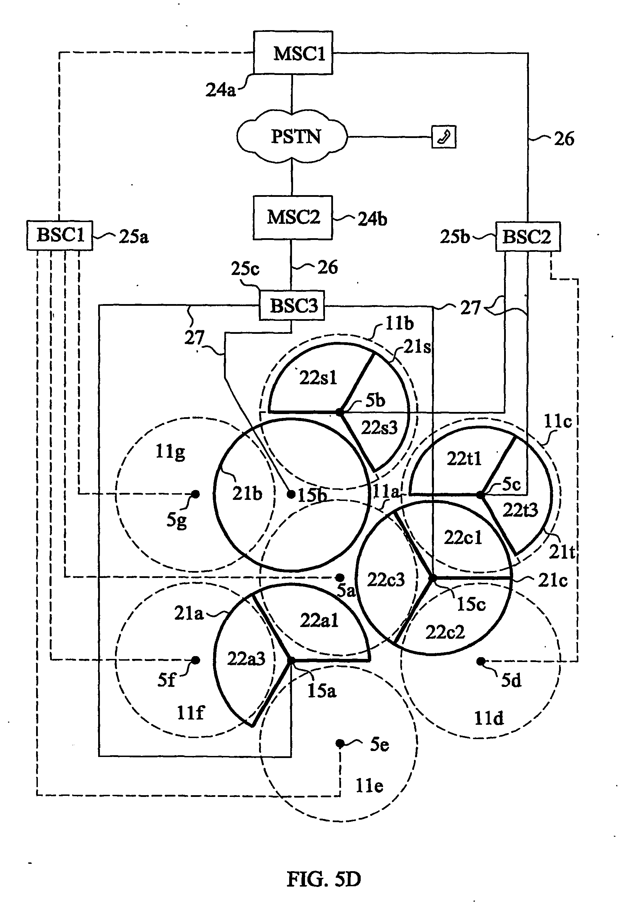

FIG.5D is an embodiment of more complicated integration of an upward mobile cellular system and a ground mobile cellular system. It is the combination of integration embodiments in FIG.5B and in FIG.5C. That is that some upward cells and upward sectors share BTSs, BSCs and MSC of ground cells, ground sectors and ground cellular network; some upward cells and upward sectors have their own BTSs, BSCs and MSC. In FIG.5D, upward cell 21s shares BTS 5b of ground cell 11b. It contains two upward sectors 22s1 and 22s3. Upward cell 21t shares BTS 5c of ground cell 11c. It contains two upward sectors 22t1 and 22t3. Upward cell 21s and 21t share BSC2 25b and MSC124a of the ground mobile cellular network. While upward cell 21 a, 21 b and 21c each has its own BTS located near the boarder of ground cells. They are BTS 15a, 15b and 15c respectively. Also they have their own BSC3 25c and MSC2 of 24b. All upward cells 21 a, 21 b, 21 c, 21 s and 21t compose an upward mobile cellular network. This embodiment provides flexibility and cost-efficiency for a mobile cellular system to expand its coverage to space above ground.

FIG. 5D is also an embodiment of combination of the method of avoiding interference by sharing base station between upward cell and ground cell and the method of avoiding interference by using dedicated frequencies or frequency spectra in upward cellular network. Dedicated frequencies are used in upward cell 21 a, 21 b and 21 c in FIG.5D to avoid interference with ground cells.

For a CDMA mobile cellular system, the same spread spectrum of a ground cell may be reused in an upward cell when base stations of both cells are not collocated. In this case, an upward cell acts as a neighbour cell of ground cells in space. For example, if the mobile cellular system is CDMA system in FIG.5C, upward cell 21 a, 21b and 21c may use the same spread spectrum of ground cells. Besides acting as the neighbour cell of upward cell 21 a and 21c, upward cell 21 b also acts as the neighbour cell of ground cell 11a, 11b and 11g in space above ground. In a 3D cellular network, we should consider neighbour cells in a 3D view.

A typical base station sector antenna has a beam pattern wide in azimuth but narrow in elevation, which well fits ground sector coverage. FIG.6A illustrates a typical base station sector antenna, its beam pattern and coverage. Sector antenna 31 comprises a set of radiation elements (dipoles, for example) 32 aligning in a vertical plane. It generates beam 33 whose azimuth beam-width φ (45°, for example) is much larger than its elevation beam-width θ (10°, for example). Beam 33 can't cover whole high-rise building 20 when antenna 31 is close to it (500 meters, for example), even if it is up-tilted. A coordinate XYZ is shown as a reference (axis Y represents elevation direction, axis X and axis Z represent two perpendicular directions in a horizontal plane).

High-rise buildings are not everywhere. They may concentrate in a small core business area in a city and intersperse in wide urban area. Maybe there are only few high-rise buildings to be covered in a geographical area. As small size cells are adopted in mobile cellular system in city, many cellular base stations locate close to high-rise buildings. Instead of covering the whole upward cell, a base station antenna may focus its coverage on individual high-rise building. To do so, it will benefit system performance for stronger cellular signal in high-rise buildings and less interference to its cellular network, because antenna radiation focuses in a splice space of a cell than in the whole cell.

This invention provides another method for cellular signal coverage in high-rise buildings for a mobile cellular system. That is to provide a narrow beam antenna whose beam has larger elevation beam-width than its azimuth beam-width to a base station of a mobile cellular system. This antenna connects to the BTS of the base station. It radiates cellular signal generated by the BTS in a beam pattern that wide in elevation but narrow in azimuth, and points its beam to the high-rise buildings nearby. To avoid interference, either its beam is up-tilted to point upward or dedicated cellular frequencies or frequency spectra are used in the base station. This solution is useful to cover single high-rise building or a group of high-rise buildings, which are adjacent to each other, in short distance.

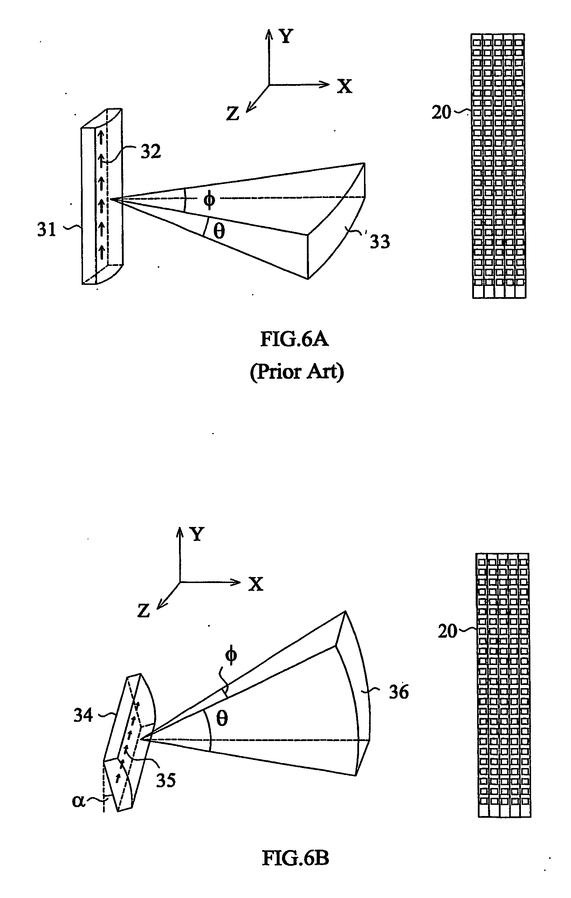

FIG.6B is an embodiment of the antenna and the method. Antenna 34 comprises a set of radiation elements (dipoles, for example) 35 aligning in a horizontal plane. It generates beam 36 whose elevation beam-width θ (45°, for example) is larger than its azimuth beam-width φ (10°, for example). It is up-tilted α degree (30°, for example) to cover high-rise building 20. Coordinate XYZ is shown as a reference. Antenna 34 can be easily realized. Just rotating antenna 31 in FIG.6A 90° clockwise around X-axis, it becomes antenna 34 in FIG.6B. Antenna 34 fits individual or a small ground of high-rise buildings coverage in short distance.

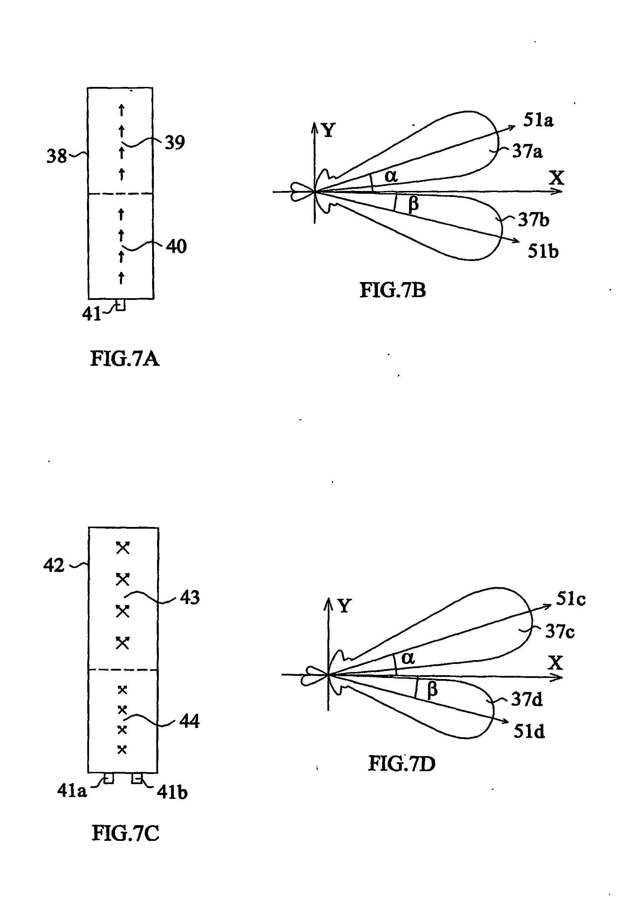

FIG.7A to 7F illustrates a new type of multi-beam multi-tilt antenna, which can be used to cover both upward cell (or upward sector) and ground cell (or ground sector) with a single antenna.

As limited antenna mounting spaces and many antennas to be mounted on an antenna supporting structure in a base station, it is preferable that an antenna has multiple functions. Besides space saving, a multi-function antenna is economic also. For this reason, a new type of multi-beam multi-tilt base station antenna is invented to cover both ground cell (or ground sector) and upward cell (or upward sector) with a single antenna. It comprises at least two sets of radiation elements, a supporting device and means to tilt its beams. Each set of radiation elements comprises at least two radiation elements. The radiation elements of each set are mounted on the supporting device in spaced apart relationship. This antenna also comprises a mounting structure, a housing and signal input/output port (or ports). The radiation element sets, the supporting device and the means of beam tilting are disposed within the housing. The first set of radiation elements generates a first beam in a first direction; the second set of radiation elements generates a second beam in a second direction that is different from the first direction. The means of beam tilting includes mechanical means, or electrical means, or both means, for tilting each of the beams in predefined direction. So this antenna provides radio signal coverage in two directions. Each beam may be omni-directional or directional. The first set and the second set may operate in the same mobile cellular frequency band or in different mobile cellular frequency bands that are not totally overlapped. The polarity of the first beam and the polarity of the second beam may be the same or different. The angle between the two beams is between 3° and 60°. It is preferred in this invention that when this antenna is used in a cellular base station, its first beam points downward and its second beam points upward. So it covers both ground cell (or ground sector) and upward cell (or upward sector) with a single antenna.

FIG.7A is an embodiment of the multi-beam multi-tilt base station antenna of this invention, which is in single cellular frequency band and in vertical polarity. FIG.7B illustrates its lobe pattern in elevation. Dual-beam dual-tilt antenna 38 comprises two sets of radiation elements 39 (above the dashed line) and 40 (below the dashed line). Both sets are in vertical polarity and operate in same frequency band (800MHz cellular frequency band, for example). Set 39 comprises four radiation elements spaced from each other and mounted on a supporting device (a grounded plate, for example). It generates beam 37b that down-tilts β degree (8°, for example) below the horizontal surface. Set 40 comprises four radiation elements spaced from each other and mounted on the supporting device. It generates beam 37a that up-tilts α degree (10°, for example) above the horizontal surface. Arrow 51 a is the axis of beam 37a. Arrow 51 b is the axis of beam 37b. Beam 37a and 37b each has proximately the same characteristics in both transmitting and receiving directions. Port 41 is RF signal input/output of the antenna. The tilting of each beam can be realized mechanically, or electrically, or in both ways.

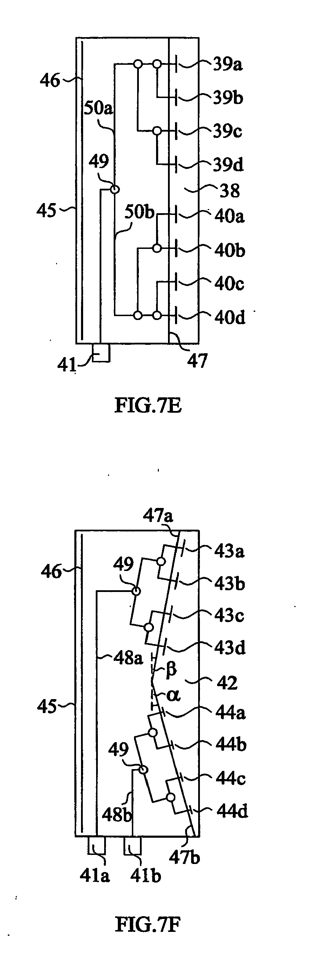

FIG.7E is an embodiment of electrical means to tilt each beam of antenna 38 in FIG.7A in predefined direction. Four radiation elements 39a, 39b, 39c and 39d of set 39 are mounted on a grounded supporting plate 47 in proximately equal spacing. Four radiation elements 40a, 40b, 40c and 40d of set 40 are also mounted on supporting plate 47 in proximately equal spacing. Supporting plate 47 is in proximately vertical direction. 50a is the signal feeding circuit of set 39. It connects to port 41 through splitter 49 (evenly or unevenly splitting signals). The feeding circuit to radiation elements 39a, 39b, 39c and 39d increases in length in steps. So phases increase in step in them (for example, starting from element 39a, phase increases δ in element 39b, 2δ in element 39c and 3δ in element 39d). So the beam generated by set 39 down-tilts. (The down-tilt angle depends on frequency and phase shift step δ). 50b is the signal feeding circuit of set 40. It connects to port 41 through splitter 49. The feeding circuit to radiation elements 40a, 40b, 40c and 40d decreases in length in steps. So phases decrease in step in them (for example, starting from element 40a, phase decreases γ in element 40b, 2γ in element 40c and 3γ in element 40d). So the beam generated by set 40 up-tilts. (The up-tilt angle depends on frequency and phase shift step γ). Reflecting plate 46 is disposed on the inner backside of housing 45 to reflect radiation signal back. All radiation elements, support plate 47, feeding circuit 50a and 50b, splitter 49 and reflecting plate 46 are disposed inside housing 45. A mounting structure is attached to back exterior of housing 45 (not shown in the diagram). So antenna in FIG.7E generates an up-tilt beam and a down-tilt beam. It is a single-band dual-beam dual-tilt base station sector antenna.

FIG.7C is another embodiment of the multi-beam multi-tilt antenna of this invention, which is in dual mobile cellular frequency bands and in cross polarity. FIG.7D illustrates its lobe pattern in elevation. Dual-beam dual-tilt antenna 42 comprises two sets of radiation elements 43 (above the dashed line) and 44 (below the dashed line). Both sets are in cross polarity. Set 43 operates in a first frequency band (800MHz cellular band, for example); Set 44 operates in a different frequency band (1900MHZ cellular band, for example). Set 43 comprises four elements spaced from each other and mounted on a supporting device (a grounded plate, for example). It generates beam 37d that down-tilts β degree (8°, for example) below the horizontal surface. Set 44 comprises four radiation elements spaced from each other and mounted on the supporting plate. It generates beam 37c that up-tilts α degree (10°, for example) above the horizontal surface. Arrow 51c is the axis of beam 37c. Arrow 51d is the axis of beam 37d. Beam 37c and 37d each has proximately the same characteristics in both transmitting and receiving directions. Port 41 a is RF signal input/output of set 43. Port 41 b is RF signal input/output of set 44. The tilting of each beam can be realized mechanically, or electrically, or in both ways.

FIG.7F shows mechanical means to tilt each beam of antenna 42 in FIG.7C in predefined direction. Set 43 includes four radiation elements 43a, 43b, 43c and 43d. They are mounted on a grounded supporting plate 47a in proximately equal spacing. Supporting plate 47a is down-tilted β degree from vertical direction. Set 44 includes four radiation elements 44a, 44b, 44c and 44d. They are mounted on a grounded supporting plate 47b in proximately equal spacing. Supporting plate 47b is up-tilted α degree from vertical direction. 48a is the signal feeding circuit for set 43. It connects to port 41 a. The feeding circuit to each radiation elements is in proximately equal length and equal phase. So set 43 generates a beam in direction perpetrated to supporting plate 47a. 48b is the signal feeding circuit for set 44. It connects to port 41 b. The feeding circuit to each radiation elements is in proximately equal length and equal phase. So set 44 generates a beam in direction perpetrated to supporting plate 47b. Reflecting plate 46 is disposed on the inner backside of housing 45 to reflect radiation signal back. A mounting structure is attached to back exterior of housing 45 (not shown in the diagram). 49 are splitters in the feeding circuits. All radiation elements, support plates 47a and 47b, feeding circuit 48a and 48b, and reflecting plate 46 are disposed inside housing 45. So antenna in FIG.7F generates a beam down-tilting β degree and a beam up-tilting α degree. It is dual-band dual-beam dual-tilt base station sector antenna.

The multi-beam multi-tilt antenna of this invention may be applied in a base station of a mobile cellular system for providing 3D space coverage. In this application, the multi-beam multi-tilt antenna connects to the BTS of the base station. Its one beam points downward to covers the ground cell (or ground sector); its one another beam points upward to cover the upward cell (or upward sector). So this base station provides 3D space coverage. For example, single-band dual-beam dual-tilt antenna 38 in FIG.7A can be used to replace antenna 1, antenna 10 and splitter/combiner (or coupler) 30 in FIG.4A. Its port 41 connects to BTS 5. Its one beam points upward and another beam points downward, so as to cover both ground sector and upward sector. In this application, antenna 38 acts as up-tilt antenna 10 and down-tilt antenna 1 in an integral form. Another example, dual-band dual-beam dual-tilt antenna 42 in FIG.7C can be used to replace antenna 1 and antenna 10 in FIG.4C. Its port 41 a connects to BTS1 5 of ground sector, its port 41 b connects to BTS415 of upward sector. Antenna 42 has its beam generated by BTS1 5 points downward to cover ground sector. Antenna 42 has its beam generated by BTS415 points upward to cover upward sector. So it covers both ground sector and upward sector.

The achievement of this invention is a cost-effective solution for cellular signal coverage in high-rise buildings for a mobile cellular system. The network, method, base station and antenna of this invention can also be used in other cellular telecommunication systems for providing cellular signal coverage on ground and in space above ground.

Where in the foregoing description reference has been made to integers having known equivalents then such equivalents are herein incorporated as if individually set forth.

Although this invention has been described by way of example and with reference to possible embodiments thereof it is to be appreciated that improvements and modifications may be made thereto without departing from the scope of the claims of the present invention. For example, antenna space diversity in base station, especially in uplink, is a common method used in ground cells and sectors to overcome multipath fading and to improve system performance in a mobile cellular system. It can be implemented in base stations of upward cells and upward sectors for the same purposes. That is to add an up-tilt space diversity antenna for an up-tilt antenna in the base station of an upward cell (or upward sector). Another example, the up-tilt antenna and the down-tilt antenna, sharing a BTS in a base station, may be integrally formed into one antenna for providing the same function, like antenna 38 in FIG.7A.

## Claims

1. A cellular telecommunication network for providing cellular telecommunication service in a geographical area, said geographical area divided into a plurality of cells, said network comprising:
a plurality of base stations, each providing radio signals to subscriber stations in an associated one of said cells;
at least a first one of said base stations comprising
a transmitter for generating a first radio signal to be provided within a first one of said cells which is associated with said first base station, and within a frequency range which is reusable in more than one of said cells;
a first antenna (1) coupled to said transmitter for radiating said first radio signal in a characteristic radiation pattern having its major lobe pointed downward;
a second antenna (10) coupled to said transmitter for radiating said first radio signal in a characteristic radiation pattern having its major lobe pointed upward;
so as to radiate said first radio signal within said first cell below said first antenna and above said second antenna, while limiting radiation of said first radio signal into other ones of said cells within which said first radio signal may interfere with radio signals from other ones of said base stations.

2. The network of claim 1 wherein said first base station further comprises a receiver for receiving radio signals generated by subscriber stations in said first cell.

3. The network of claim 2 wherein said receiver is coupled to said first and second antennas so as to receive said radio signals generated by subscriber stations in said first cell through at least one of said first and second antennas.

4. The network of any one of claims 1 to 3, wherein said first and second antennas are substantially collocated.

5. The network of any one of claims 1 to 4, wherein said first antenna is located above said second antenna in altitude.

6. The network of any one of claims 1 to 5, wherein said first and second antennas are integrally formed.

7. The network of anyone of claims 1 to 6, wherein a second one of said base stations comprises:
a second base station transmitter for generating a second base station radio signal to be provided within a second one of said cells which is associated with said second base station, and within a frequency range which is reusable in more than one of said cells;
a second base station antenna coupled to said second base station transmitter for radiating said second base station radio signal in a characteristic radiation pattern having its major lobe pointed upward;
so as to radiate said second base station radio signal within said second cell above said second base station antenna, while limiting radiation of said second base station radio signal into other ones of said cells within which said second base station radio signal may interfere with radio signals from other ones of said base stations.

8. The network of claim 7, wherein said second base station further comprises a receiver for receiving radio signals generated by subscriber stations in said second cell.

9. A method of providing cellular telecommunication service in a geographical area, said geographical area divided into a plurality of cells, comprising:
generating a plurality of radio signals, each to be provided to subscriber stations in an associated one of said cells and having a frequency range which is reusable in more than one of said cells;
providing each one of said signals to its associated cell, wherein a first one of said signals is provided to a first one of said cells which is associated with said first signal by
radiating, from a first antenna (1), said first signal in a characteristic radiation pattern having its major lobe pointed downward, and
radiating, from a second antenna (10) said first signal in a characteristic radiation pattern having its major lobe pointed upward,
so as to radiate said first signal within said first cell below said first antenna and above said second antenna, while limiting radiation of said first signal into other ones of said cells within which said first signal may interfere with other ones of said signals.

10. The method of claim 9, further comprising receiving at least one radio signal from a subscriber station in said first cell.

11. The method of claim 10 wherein said at least one radio signal is received through at least one of said first and second antennas.

12. The method of any one of claims 9 to 11, wherein said first and second antennas are substantially collocated.

13. The method of any one of claims 9 to 12, wherein said first antenna is above said second antenna in altitude.

14. The method of any one of claims 9 to 13, wherein said first and second antennas are integrally formed.

15. The method of claim 9 to 14, wherein a second one of said signals is provided to a second one of said cells which is associated with said second signal by
radiating, from a second-cell antenna, said second signal in a characteristic radiation pattern having its major lobe pointed upward,
so as to radiate said second signal within said second cell above said second-cell antenna, while limiting radiation of said second signal into other ones of said cells within which said second signal may interfere with other ones of said signals.

16. A base station of a cellular telecommunication network, said network adapted for providing a plurality of cellular radio signals in a geographical area, said geographical area divided into a plurality of cells, said base station comprising:
a transmitter for generating a transmitter radio signal to be provided within a first one of said cells, said transmitter operating at a frequency range which is reusable in more than one of said cells;
a first antenna (1) coupled to said transmitter for radiating said transmitter radio signal in a characteristic radiation pattern having its major lobe pointed downward;
a second antenna (10) coupled to said transmitter for radiating said transmitter radio signal in a characteristic radiation pattern having its major lobe pointed upward;
so as to radiate said transmitter radio signal within said first cell below said first antenna and above said second antenna, while limiting radiation of said transmitter radio signal into other ones of said cells within which said transmitter radio signal may interfere with other ones of said plurality of radio signals.

17. The base station of claim 16, further comprising a receiver for receiving radio signals generated by subscriber stations in said first cell.

18. The base station of claim 17, wherein said receiver is coupled to said first and second antennas so as to receive said radio signals generated by subscriber stations in said first cell through at least one of said first and second antennas.

19. The base station of any one of claims 16 to 18, wherein said first and second antennas are integrally formed.

20. A method of using an antenna in a cellular telecommunication network for providing cellular telecommunication service in a geographical area, said geographical area divided into a plurality of cells, said network providing a plurality of radio signals, each to be provided to subscriber stations in an associated one of said cells and having a frequency range which is reusable in more than one of said cells, said method comprising:
providing a first signal to a first one of said cells by
radiating said first signal downward from a first set of radiation elements (39,43) of said antenna in a characteristic radiation pattern having its major lobe pointed downward and extending along a first major axis;
radiating said first signal upward from a second set of radiation elements (40,44) of said antenna in a characteristic radiation pattern having its major lobe pointed upward and extending along a second major axis;
wherein the angle between said first and second major axes being in the range of 3 to 60 degrees,
so as to radiate said first signal within said first cell below and above said antenna while limiting radiation of said first signal into other ones of said cells within which said first signal may interfere with other ones of said radio signals.

## Patentansprüche

1. Zelluläres Telekommunikationsnetzwerk zum Bereitstellen eines zellulären Telekommunikationsdienstes in einem geographischen Bereich, der in eine Vielzahl von Zellen unterteilt ist, wobei das Netzwerk umfasst:
eine Vielzahl an Basisstationen, wobei jede Funksignale an die Teilnehmerstationen in einer zugehörigen Zelle dieser Zellen liefert;
zumindest eine erste dieser Basisstationen, umfassend:
einen Sender zur Generierung eines ersten Funksignals, das innerhalb einer ersten dieser Zellen, die der ersten Basisstation zugeorndet ist, und innerhalb eines Frequenzbereichs bereitzustellen ist, der in mehr als einer dieser Zellen wiederverwendbar ist;
eine erste Antenne (1), die mit dem Sender verbunden ist, um das erste Funksignal in einem charakteristischen Strahlungsmuster, dessen Hauptkeule nach unten zeigt, auszustrahlen;
eine zweite Antenne (10), die mit dem Sender verbunden ist, um das erste Funksignal in einem charakteristischen Strahlungsmuster, dessen Hauptkeule nach oben zeigt, auszustrahlen;
so dass das erste Funksignal innerhalb der ersten Zelle unterhalb der ersten Antenne und oberhalb der zweiten Antenne ausgestrahlt wird, während die Ausstrahlung des ersten Funksignals in andere dieser Zellen, innerhalb welcher das erste Funksignal die Funksignale von anderen dieser Basisstationen stören kann, eingeschränkt wird.

2. Netzwerk nach Anspruch 1, wobei die erste Basisstation weiters einen Empfänger zum Empfangen der von den Teilnehmerstationen in der ersten Zelle generierten Funksignale umfasst.

3. Netzwerk nach Anspruch 2, wobei der Empfänger mit den ersten und den zweiten Antennen verbunden ist, um die von den Teilnehmerstationen in der ersten Zelle generierten Funksignale über zumindest eine der ersten und zweiten Antennen zu empfangen.

4. Netzwerk nach einem der Ansprüche 1 bis 3, wobei die ersten und zweiten Antennen im Wesentlichen nebeneinander angeordnet sind.

5. Netzwerk nach einem der Ansprüche 1 bis 4, wobei die erste Antenne höhenmäßig oberhalb der zweiten Antenne angeordnet ist.

6. Netzwerk nach einem der Ansprüche 1 bis 5, wobei die ersten und zweiten Antennen einstückig ausgebildet sind.

7. Netzwerk nach einem der Ansprüche 1 bis 6, wobei eine zweite dieser Basisstationen umfasst:
einen zweiten Basisstation-Sender zur Generierung eines zweiten Basisstation-Funksignals, das innerhalb einer zweiten dieser Zellen, die der zweiten Basisstation zugeordnet ist, und innerhalb eines Frequenzbereichs bereitzustellen ist, der in mehr als einer dieser Zellen wiederverwendbar ist;
eine zweite Basisstation-Antenne, die mit dem zweiten Basisstation-Sender verbunden ist, um das zweite Basisstation-Funksignal in einem charakteristischen Strahlungsmuster, dessen Hauptkeule nach oben zeigt, auszustrahlen;
so dass das zweite Basisstation-Funksignal innerhalb der zweiten Zelle oberhalb der zweiten Basisstation-Antenne ausgestrahlt wird, während die Ausstrahlung des zweiten Basisstation-Funksignals in andere dieser Zellen, innerhalb welcher das zweite Basisstation-Funksignal die Funksignale von anderen dieser Basisstationen stören kann, eingeschränkt wird.

8. Netzwerk nach Anspruch 7, wobei die zweite Basisstation weiters einen Empfänger zum Empfangen der von den Teilnehmerstationen in der zweiten Zelle generierten Funksignale umfasst.

9. Verfahren zur Bereitstellung eines zellulären Telekommunikationsdienstes in einem geographischen Bereich, der in eine Vielzahl von Zellen unterteilt ist, wobei das Verfahren umfasst:
Generieren einer Vielzahl an Funksignalen, wobei jedes an Teilnehmerstationen in einer zugehörigen Zelle der Zellen zu liefern ist, und einen Frequenzbereich aufweist, der in mehr als einer dieser Zellen wiederverwendbar ist;
Liefern jedes dieser Signale an seine zugehörige Zelle, wobei ein erstes dieser Signale an eine erste dieser Zellen geliefert wird, wobei diese erste Zelle mit dem ersten Signal verbunden ist durch:
Ausstrahlen eines ersten Signals in einem charakteristischen Sstrahlungsmuster, dessen Hauptkeule nach unten zeigt, von einer ersten Antenne (1); und
Ausstrahlen eines ersten Signals in einem charakteristischen Strahlungsmuster, dessen Hauptkeule nach oben zeigt, von einer zweiten Antenne (10);
so dass das erste Signal innerhalb der ersten Zelle unterhalb der ersten Antenne und oberhalb der zweiten Antenne ausgestrahlt wird, während die Ausstrahlung des ersten Signals in andere dieser Zellen, innerhalb welcher das erste Signal andere dieser Signale stören kann, eingeschränkt wird.

10. Verfahren nach Anspruch 9, welches weiters das Empfangen von zumindest einem Funksignal von einer Teilnehmerstation in der ersten Zelle umfasst.

11. Verfahren nach Anspruch 10, wobei das zumindest eine Funksignal über zumindest eine der ersten und zweiten Antennen empfangen wird.

12. Verfahren nach einem der Ansprüche 9 bis 11, wobei die ersten und zweiten Antennen im Wesentlichen nebeneinander angeordnet sind.

13. Verfahren nach einem der Ansprüche 9 bis 12, wobei die erste Antenne höhenmäßig oberhalb der zweiten Antenne angeordnet ist.

14. Verfahren nach einem der Ansprüche 9 bis 13, wobei die ersten und zweiten Antennen einstückig ausgebildet sind.

15. Verfahren nach den Ansprüchen 9 bis 14, wobei ein zweites dieser Signale an eine zweite dieser Zellen geliefert wird, wobei diese zweite Zelle mit dem zweiten Signal verbunden ist durch:
Ausstrahlen eines zweiten Signals in einem charakteristischen Strahlungsmuster, dessen Hauptkeule nach oben zeigt, von einer Antenne der zweiten Zelle;
so dass das zweite Signal innerhalb der zweiten Zelle oberhalb der Antenne der zweiten Zelle ausgestrahlt wird, während die Ausstrahlung des zweiten Signals in andere dieser Zellen, innerhalb welcher das zweite Signal andere dieser Signale stören kann, eingeschränkt wird.

16. Basisstation eines zellulären Telekommunikationsnetzwerkes, wobei das Netzwerk zum Bereitstellen einer Vielzahl an zellulären Funksignalen in einem geographischen Bereich, der in eine Vielzahl von Zellen unterteilt ist, adaptiert ist, wobei die Basisstation Sender zum Generieren eines Sender-Funksignals, das innerhalb einer ersten dieser Zellen bereitzustellen ist, wobei der Sender in einem Frequenzbereich agiert, der für mehr als eine dieser Zellen wiederverwendbar ist;
eine erste Antenne (1), die mit dem Sender verbunden ist, um das Sender-Funksignal in einem charakteristischen Strahlungsmuster, dessen Hauptkeule nach unten zeigt, auszustrahlen;
eine zweite Antenne (10), die mit dem Sender verbunden ist, um das Sender-Funksignal in einem charakteristischen Strahlungsmuster, dessen Hauptkeule nach oben zeigt, auszustrahlen;
so dass das Sender-Funksignal innerhalb der ersten Zelle unterhalb der ersten Antenne und oberhalb der zweiten Antenne ausgestrahlt wird, während die Ausstrahlung des ersten Sender-Funksignals in andere dieser Zellen, innerhalb welcher das Sender-Funksignal andere dieser Vielzahl von Funksignalen stören kann, eingeschränkt wird.

17. Basisstation nach Anspruch 16, welches weiters einen Empfänger zum Empfangen der von den Teilnehmerstationen in der ersten Zelle generierten Funksignale umfasst.

18. Basisstation nach Anspruch 17, wobei der Empfänger mit den ersten und zweiten Antennen verbunden ist, um die von den Teilnehmerstationen in der ersten Zelle generierten Funksignale über zumindest eine der ersten und zweiten Antennen zu empfangen.

19. Basisstation nach einem der Ansprüche 16 bis 18, wobei die ersten und zweiten Antennen einstückig ausgebildet sind.

20. Verfahren zur Verwendung einer Antenne in einem zellulären Telekommunikationsnetzwerk zur Bereitstellung eines zellulären Telekommunikationsdienstes in einem geographischen Bereich, der in eine Vielzahl an Zellen unterteilt ist, wobei das Netzwerk eine Vielzahl an Funksignalen bereitstellt, wobei jedes davon an die Teilnehmerstationen in einer zugehörigen Zelle dieser Zellen zu liefern ist, und einen Frequenzbereich aufweist, der in mehr als einer der Zellen wiederverwendbar ist, wobei das Verfahren umfasst:
Liefern eines ersten Signals an eine erste dieser Zellen durch:
Ausstrahlen des ersten Signals abwärts eines ersten Satzes von Strahlungselementen (39, 43) der Antenne in einem charakteristischen Strahlungsmuster, dessen Hauptkeule nach unten zeigt und das sich entlang einer ersten Hauptachse erstreckt;
Ausstrahlen des ersten Signals aufwärts eines zweiten Satzes von Strahlungselementen (40, 44) der Antenne in einem charakteristischen Strahlungsmuster, dessen Hauptkeule nach oben zeigt und das sich entlang einer zweiten Hauptachse erstreckt;
wobei der Winkel zwischen der ersten und zweiten Hauptachse im Bereich von 3 bis 60 Grad liegt,
so dass das erste Signal innerhalb der ersten Zelle unterhalb und oberhalb der Antenne ausgestrahlt wird, während die Ausstrahlung des ersten Signals in andere dieser Zellen, innerhalb welcher das erste Signal andere dieser Funksignale stören kann, eingeschränkt wird.

## Revendications

1. Réseau de télécommunication cellulaire pour fournir un service de télécommunication cellulaire dans une zone géographique, ladite zone géographique étant divisée en une pluralité de cellules, ledit réseau comprenant :
une pluralité de stations de base fournissant chacune des signaux radio à des stations d'abonnés dans l'une, associée, desdites cellules ;
au moins une première desdites stations de base comprenant :
un émetteur pour produire un premier signal radio devant être fourni dans l'une première desdites cellules qui est associée à ladite première station de base, et dans une gamme de fréquences qui est réutilisable dans plus d'une desdites cellules ;
une première antenne (1) couplée audit émetteur pour diffuser ledit premier signal radio selon un diagramme de rayonnement caractéristique dont le lobe principal est pointé vers le bas ;
une deuxième antenne (10) couplée audit émetteur pour diffuser ledit premier signal radio selon un diagramme de rayonnement caractéristique dont le lobe principal est pointé vers le haut ;
de façon à diffuser ledit premier signal radio dans ladite première cellule en dessous de ladite première antenne et au-dessus de ladite deuxième antenne tout en limitant la diffusion dudit premier signal radio dans d'autres desdites cellules dans lesquelles ledit premier signal radio peut brouiller des signaux radio provenant d'autres desdites stations de base.

2. Réseau selon la revendication 1, **caractérisé en ce que** ladite première station de base comprend en outre un récepteur pour recevoir des signaux radio produits par des stations d'abonnés dans ladite première cellule.

3. Réseau selon la revendication 2, **caractérisé en ce que** ledit récepteur est couplé auxdites première et deuxième antennes de façon à recevoir lesdits signaux radio produits par lesdites stations d'abonnés dans ladite première cellule par l'intermédiaire d'au moins l'une desdites première et deuxième antennes.

4. Réseau selon l'une quelconque des revendications 1 à 3, **caractérisé en ce que** lesdites première et deuxième antennes sont sensiblement colocalisées.

5. Réseau selon l'une quelconque des revendications 1 à 4, **caractérisé en ce que** ladite première antenne est située au-dessus de ladite deuxième antenne en altitude.

6. Réseau selon l'une quelconque des revendications 1 à 5, **caractérisé en ce que** lesdites première et deuxième antennes sont d'une seule pièce.

7. Réseau selon l'une quelconque des revendications 1 à 6, **caractérisé en ce qu'**une deuxième desdites stations de base comprend :
un deuxième émetteur de station de base pour produire un deuxième signal radio de station de base devant être fourni dans une deuxième desdites cellules qui est associée à ladite deuxième station de base, et dans une gamme de fréquences qui est réutilisable dans plus d'une desdites cellules ;
une deuxième antenne de station de base couplée audit deuxième émetteur de station de base pour diffuser ledit deuxième signal radio de station de base selon un diagramme de rayonnement caractéristique dont le lobe principal est pointé vers le haut ;
de façon à diffuser ledit deuxième signal radio de station de base dans ladite deuxième cellule au-dessus de ladite deuxième antenne de station de base tout en limitant la diffusion dudit deuxième signal radio de station de base dans d'autres desdites cellules dans lesquelles ledit deuxième signal radio de station de base peut brouiller des signaux radio provenant d'autres desdites stations de base.

8. Réseau selon la revendication 7, **caractérisé en ce que** ladite deuxième station de base comprend en outre un récepteur pour recevoir des signaux radio produits par des stations d'abonnés dans ladite deuxième cellule.

9. Procédé de fourniture d'un service de télécommunication cellulaire dans une zone géographique, ladite zone géographique étant divisée en une pluralité de cellules, comprenant :
la production d'une pluralité de signaux radio dont chacun doit être fourni à des stations d'abonnés dans l'une, associée, desdites cellules et ayant une gamme de fréquences qui est réutilisable dans plus d'une desdites cellules ;
la fourniture de chacun desdits signaux à la cellule qui lui est associée, **caractérisé en ce qu'**un premier desdits signaux est fourni à une première desdites cellules qui est associée audit premier signal par :
diffusion, depuis une première antenne (1), dudit premier signal selon un diagramme de rayonnement caractéristique dont le lobe principal est pointé vers le bas, et
diffusion, depuis une deuxième antenne (10), dudit premier signal selon un diagramme de rayonnement caractéristique dont le lobe principal est pointé vers le haut,
de façon à diffuser ledit premier signal dans ladite première cellule en dessous de ladite première antenne et au-dessus de ladite deuxième antenne tout en limitant la diffusion dudit premier signal dans d'autres desdites cellules dans lesquelles ledit premier signal peut brouiller d'autres desdits signaux.

10. Procédé selon la revendication 9, comprenant en outre la réception d'au moins un signal radio en provenance d'une station d'abonné dans ladite première cellule.

11. Procédé selon la revendication 10, **caractérisé en ce que** ledit au moins un signal radio est reçu par l'intermédiaire d'au moins l'une desdites première et deuxième antennes.

12. Procédé selon l'une quelconque des revendications 9 à 11, **caractérisé en ce que** lesdites première et deuxième antennes sont sensiblement colocalisées.

13. Procédé selon l'une quelconque des revendications 9 à 12, **caractérisé en ce que** ladite première antenne est située au-dessus de ladite deuxième antenne en altitude.

14. Procédé selon l'une quelconque des revendications 9 à 13, **caractérisé en ce que** lesdites première et deuxième antennes sont d'une seule pièce.

15. Procédé selon les revendications 9 à 14, **caractérisé en ce qu'**un deuxième desdits signaux est fourni à une deuxième desdites cellules qui est associée audit deuxième signal par :
diffusion, depuis une antenne de deuxième cellule, dudit deuxième signal selon un diagramme de rayonnement caractéristique dont le lobe principal est pointé vers le haut,
de façon à diffuser ledit deuxième signal dans ladite deuxième cellule au-dessus de ladite antenne de deuxième cellule tout en limitant la diffusion dudit deuxième signal dans d'autres desdites cellules dans lesquelles ledit deuxième signal peut brouiller d'autres desdits signaux.

16. Station de base d'un réseau de télécommunication cellulaire, ledit réseau étant apte à fournir une pluralité de signaux radio cellulaires dans une zone géographique, ladite zone géographique étant divisée en une pluralité de cellules, ladite station de base comprenant :
un émetteur pour produire un signal radio d'émetteur devant être fourni dans une première desdites cellules, ledit émetteur fonctionnant dans une gamme de fréquences qui est réutilisable dans plus d'une desdites cellules ;
une première antenne (1) couplée audit émetteur pour diffuser ledit signal radio d'émetteur selon un diagramme de rayonnement caractéristique dont le lobe principal est pointé vers le bas ;
une deuxième antenne (10) couplée audit émetteur pour diffuser ledit signal radio d'émetteur selon un diagramme de rayonnement caractéristique dont le lobe principal est pointé vers le haut ;
de façon à diffuser ledit signal radio d'émetteur dans ladite première cellule en dessous de ladite première antenne et au-dessus de ladite deuxième antenne tout en limitant la diffusion dudit signal radio d'émetteur dans d'autres desdites cellules dans lesquelles ledit premier signal radio peut brouiller d'autres de ladite pluralité de signaux radio.

17. Station de base selon la revendication 16, comprenant en outre un récepteur pour recevoir des signaux radio produits par des stations d'abonnés dans ladite première cellule.

18. Station de base selon la revendication 17, dans laquelle ledit récepteur est couplé auxdites première et deuxième antennes de façon à recevoir lesdits signaux radio produits par des stations d'abonnés dans ladite première cellule par l'intermédiaire d'au moins l'une desdites première et deuxième antennes.

19. Station de base selon l'une quelconque des revendications 16 à 18, **caractérisée en ce que** lesdites première et deuxième antennes sont d'une seule pièce.

20. Procédé d'utilisation d'une antenne dans un réseau de télécommunication cellulaire pour fournir un service de télécommunication cellulaire dans une zone géographique, ladite zone géographique étant divisée en une pluralité de cellules, ledit réseau fournissant une pluralité de signaux radio, devant chacun être fourni à des stations d'abonnés dans l'une, associée, desdites cellules, et ayant une gamme de fréquences qui est réutilisable dans plus d'une desdites cellules, ledit procédé comprenant :
la fourniture d'un premier signal à une première desdites cellules par :
diffusion dudit premier signal vers le bas depuis un premier ensemble d'éléments rayonnants (39, 43) de ladite antenne selon un diagramme de rayonnement caractéristique dont le lobe principal est pointé vers le bas et s'étend le long d'un premier grand axe ;
diffusion dudit premier signal vers le haut depuis un deuxième ensemble d'éléments rayonnants (40, 44) de ladite antenne selon un diagramme de rayonnement caractéristique dont le lobe principal est pointé vers le haut et s'étend le long d'un deuxième grand axe ;
**caractérisé en ce que** l'angle entre lesdits premier et deuxième grands axes est dans la gamme de 3 à 60 degrés,
de façon à diffuser ledit premier signal dans ladite première cellule en dessous et au-dessus de ladite antenne tout en limitant la diffusion dudit premier signal dans d'autres cellules dans lesquelles ledit premier signal peut brouiller d'autres desdits signaux radio.
